(19) **Europäisches Patentamt**
**European Patent Office**
**Office européen des brevets**

(11) **EP 4 135 363 A1**

(12) **EUROPEAN PATENT APPLICATION**
published in accordance with Art. 153(4) EPC

(43) Date of publication:
**15.02.2023  Bulletin 2023/07**

(21) Application number: **20929943.7**

(22) Date of filing: **10.04.2020**

(51) International Patent Classification (IPC):
*H04W 4/40* (2018.01)      *H04W 72/04* (2009.01)

(52) Cooperative Patent Classification (CPC):
**H04W 4/40; H04W 72/04**

(86) International application number:
**PCT/CN2020/084309**

(87) International publication number:
**WO 2021/203440 (14.10.2021 Gazette 2021/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Longgang District,**
**Shenzhen,**
**Guangdong 518129 (CN)**

(72) Inventors:
• **YANG, Fan**
**Shenzhen, Guangdong 518129 (CN)**
• **LI, Chao**
**Shenzhen, Guangdong 518129 (CN)**

(74) Representative: **Roth, Sebastian**
**Mitscherlich PartmbB**
**Patent- und Rechtsanwälte**
**Sonnenstraße 33**
**80331 München (DE)**

(54) **INFORMATION SENDING METHOD, INFORMATION RECEIVING METHOD, AND RELATED APPARATUSES AND DEVICES**

(57)    Embodiments of this application provide an information sending method, an information receiving method, and a related apparatus and device. The information sending method includes: receiving a physical sidelink feedback channel PSFCH; determining a first duration; and sending a PUCCH or a PUSCH not earlier than a first moment, where the first moment is a moment the first duration after an end moment of receiving the PSFCH. In the embodiments of this application, a terminal device does not send the PUCCH or the PUSCH before the moment the first duration after the end moment of receiving the PSFCH. Because the terminal device can determine the first duration, it is ensured that the terminal device may have sufficient time to process the PUCCH or the PUSCH. The PUCCH or the PUSCH may be used to carry sidelink HARQ information, and the HARQ information may be generated based on the received PSFCH. In other words, it can be ensured that the terminal device has sufficient time to process the HARQ information.

FIG. 4

**Description**

**TECHNICAL FIELD**

This application relates to the communication field, and in particular, to an information sending method, an information receiving method, an information sending apparatus, an information receiving apparatus, a terminal device, a network device, a communication apparatus, and a computer-readable storage medium.

**BACKGROUND**

In a fifth generation communication technology (the 5 Generation Mobile Communication Technology, 5G) system, for downlink data, for example, a physical downlink shared channel (Physical Downlink Shared Channel, PDSCH), delivered by a network device (for example, a base station), a terminal device needs to feed back corresponding hybrid automatic repeat request (Hybrid Automatic Repeat Request, HARQ) information. For uplink data, for example, a physical uplink shared channel (Physical Uplink Shared Channel, PUSCH) scheduled by the network device, the terminal device UE at a transmit end also needs to prepare and send the uplink data in time.

It usually takes specific time for the terminal device to process the HARQ information or prepare the uplink data. Therefore, to accurately schedule and receive the HARQ information and the uplink data in order, timing (timing) usually needs to be set or determined, so that the network device knows when to perform feedback and reporting. If the timing is set to an excessively small value, the terminal device does not have sufficient time to perform processing and then cannot perform reporting. If the timing is set to an excessively large value, communication efficiency is affected.

**SUMMARY**

Embodiments of this application disclose an information sending method, an information receiving method, an information sending apparatus, an information receiving apparatus, a terminal device, a network device, a communication apparatus, and a computer-readable storage medium, to properly ensure that a terminal device has sufficient time to process HARQ information or prepare uplink data.

According to a first aspect, an embodiment of this application provides an information sending method. The method includes:

> receiving a physical sidelink feedback channel PSFCH;
> determining a first duration; and
> sending a physical uplink control channel PUCCH or a physical uplink shared channel PUSCH not earlier than a
> first moment, where the first moment is a moment the first duration after an end moment of receiving the PSFCH.

This embodiment of this application relates to the field of vehicle-to-everything (vehicle-to-everything, V2X) technologies. A terminal device does not send the PUCCH or the PUSCH before the moment the first duration after the end moment of receiving the PSFCH. Because the terminal device can determine the first duration, it is ensured that the terminal device may have sufficient time to process the PUCCH or the PUSCH. The PUCCH or the PUSCH may be used to carry sidelink HARQ information, and the HARQ information may be generated based on the received PSFCH. In other words, it can be ensured that the terminal device has sufficient time to process the HARQ information.

In a possible implementation, that the first moment is a moment the first duration after an end moment of receiving the PSFCH includes:

that the first moment is a next symbol the first duration after the end moment of receiving the PSFCH.

In this embodiment of this application, the first moment is the next symbol the first duration after the end moment of receiving the PSFCH, so that the terminal device can send the PUCCH or the PUSCH in time on a premise that there is sufficient time to process the PUCCH or the PUSCH. This improves communication efficiency, and increases a throughput of a communication system.

In a possible implementation, the determining a first duration includes:

> determining the first duration based on a quantity of PSFCHs received in a slot; or
> determining the first duration based on a quantity of resource blocks RBs that are received in a slot and that are
> used for PSFCH transmission.

In this embodiment of this application, the first duration is determined based on the quantity of PSFCHs received in the slot, or the first duration is determined based on the quantity of resource blocks RBs that are received in the slot and that are used for PSFCH transmission, indicating that the first duration is related to the quantity of PSFCHs received in the slot or is related to the quantity of RBs used for PSFCH transmission. In addition, the quantity of PSFCHs received in the slot or the quantity of RBs used for PSFCH transmission may indicate a processing capability of the terminal device. Therefore, the first duration is determined based on the processing capability of the terminal device, so that it can be well ensured that the terminal device has sufficient time to process the PUCCH or the PUSCH.

In a possible implementation, the determining a first duration includes:
determining the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In this embodiment of this application, the first duration is determined based on the subcarrier spacing, indicating that the first duration is related to the subcarrier spacing. For example, a larger subcarrier spacing indicates a longer first duration. Therefore, it can be well ensured that the terminal device has sufficient time to process the PUCCH or the PUSCH.

In a possible implementation, the first duration satisfies the following relationship:

$$T_1 = (N_1 + X)(2048 + 144) \cdot \kappa 2^{-\mu} \cdot T_c,$$

where

$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

In this embodiment of this application, the first duration is determined based on the foregoing formula. Therefore, the first duration may be well determined based on the processing capability of the terminal device, so that it can be well ensured that the terminal device has sufficient time to process the PUCCH or the PUSCH.

In a possible implementation, the PSFCH is located on any one of the following types of frequency domain resources:

one or more resource pools; or
one or more carriers; or
one or more frequency bands; or
one or more frequency band combinations.

In this embodiment of this application, the PSFCH received by the terminal device may be located in the one or more resource pools, or on the one or more carriers, or in the one or more frequency bands, or in the one or more frequency band combinations. The first duration is determined based on the quantity of PSFCHs received in the slot, so that it can be well ensured that the terminal device has sufficient time to process the PUCCH or the PUSCH.

According to a second aspect, an embodiment of this application provides an information receiving method. The method includes:

determining a first duration; and
receiving a physical uplink control channel PUCCH or a physical uplink shared channel PUSCH not earlier than a first moment, where the first moment is a moment the first duration after an end moment of receiving a physical sidelink feedback channel PSFCH by a terminal device.

This embodiment of this application relates to the field of vehicle-to-everything (vehicle-to-everything, V2X) technologies. After determining the first duration, a network device configures the first duration for the terminal device. In other words, the PUCCH or the PUSCH sent by the terminal device may be received not earlier than the first moment. Therefore, it can be ensured that the terminal device may have sufficient time to process the PUCCH or the PUSCH. The PUCCH or the PUSCH may be used to carry sidelink HARQ information, and the HARQ information may be generated based on the received PSFCH. In other words, it can be ensured that the terminal device has sufficient time to process the HARQ information.

In a possible implementation, that the first moment is a moment the first duration after an end moment of receiving a PSFCH by a terminal device includes:
that the first moment is a next symbol the first duration after the end moment of receiving the PSFCH by the terminal device.

In this embodiment of this application, the first moment is the next symbol the first duration after the end moment of receiving the PSFCH by the terminal device, so that the terminal device can send the PUCCH or the PUSCH in time on a premise that there is sufficient time to process the PUCCH or the PUSCH. This improves communication efficiency, and increases a throughput of a communication system.

In a possible implementation, the determining a first duration includes:

determining the first duration based on a quantity of PSFCHs received by the terminal device in a slot; or
determining the first duration based on a quantity of resource blocks RBs that are received by the terminal device in a slot and that are used for PSFCH transmission.

In this embodiment of this application, the first duration is determined based on the quantity of PSFCHs received by the terminal device in the slot, or the first duration is determined based on the quantity of resource blocks RBs that are received by the terminal device in the slot and that are used for PSFCH transmission, indicating that the first duration is related to the quantity of PSFCHs received in the slot or is related to the quantity of RBs used for PSFCH transmission. In addition, the quantity of PSFCHs received in the slot or the quantity of RBs used for PSFCH transmission may indicate a processing capability of the terminal device. Therefore, the first duration is determined based on the processing capability of the terminal device, so that it can be well ensured that the terminal device has sufficient time to process the PUCCH or the PUSCH.

In a possible implementation, the determining a first duration includes:
determining the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In this embodiment of this application, the first duration is determined based on the subcarrier spacing, indicating that the first duration is related to the subcarrier spacing. For example, a larger subcarrier spacing indicates a longer first duration. Therefore, it can be well ensured that the terminal device has sufficient time to process the PUCCH or the PUSCH.

In a possible implementation, the first duration satisfies the following relationship:

$$T_1 = (N_1 + X)(2048 + 144) \cdot \kappa 2^{-\mu} \cdot T_C,$$

where
$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

In this embodiment of this application, the first duration is determined based on the foregoing formula. Therefore, the first duration may be well determined based on the processing capability of the terminal device, so that it can be well ensured that the terminal device has sufficient time to process the PUCCH or the PUSCH.

According to a third aspect, an embodiment of this application provides an information sending apparatus. The apparatus includes:

a transceiver unit, configured to receive a physical sidelink feedback channel PSFCH; and
a processing unit, configured to determine a first duration, where
the transceiver unit is further configured to send a physical uplink control channel PUCCH or a physical uplink shared channel PUSCH not earlier than a first moment, where the first moment is a moment the first duration after an end moment of receiving the PSFCH.

In a possible implementation, that the first moment is a moment the first duration after an end moment of receiving the PSFCH includes:
that the first moment is a next symbol the first duration after the end moment of receiving the PSFCH.
In a possible implementation, the processing unit is further configured to:

determine the first duration based on a quantity of PSFCHs received in a slot; or
determine the first duration based on a quantity of resource blocks RBs that are received in a slot and that are used for PSFCH transmission.

In a possible implementation, the processing unit is further configured to:
determine the first duration based on a subcarrier spacing.
In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_c,$$

where
$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.
In a possible implementation, the PSFCH is located on any one of the following types of frequency domain resources:

one or more resource pools; or
one or more carriers; or
one or more frequency bands; or
one or more frequency band combinations.

According to a fourth aspect, an embodiment of this application provides an information receiving apparatus. The apparatus includes:

a processing unit, configured to determine a first duration; and
a transceiver unit, configured to receive a physical uplink control channel PUCCH or a physical uplink shared channel PUSCH not earlier than a first moment, where the first moment is a moment the first duration after an end moment of receiving a physical sidelink feedback channel PSFCH by a terminal device.

In a possible implementation, that the first moment is a moment the first duration after an end moment of receiving a PSFCH by a terminal device includes:
that the first moment is a next symbol the first duration after the end moment of receiving the PSFCH by the terminal device.
In a possible implementation, the processing unit is further configured to:

determine the first duration based on a quantity of PSFCHs received by the terminal device in a slot; or
determine the first duration based on a quantity of resource blocks RBs that are received by the terminal device in a slot and that are used for PSFCH transmission.

In a possible implementation, the processing unit is further configured to:
determine the first duration based on a subcarrier spacing.
In a possible implementation, the subcarrier spacing is one of the following:

a subcarrier spacing of the PSFCH;

a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_c,$$

where
$T_1$ is the first duration, $N_1$ is a quantity of symbols that is determined based on a first subcarrier spacing, X is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

According to a fifth aspect, an embodiment of this application provides a terminal device. The terminal device includes:

a transceiver unit, configured to receive a physical sidelink feedback channel PSFCH; and
a processing unit, configured to determine a first duration, where
the transceiver unit is further configured to send a physical uplink control channel PUCCH or a physical uplink shared channel PUSCH not earlier than a first moment, where the first moment is a moment the first duration after an end moment of receiving the PSFCH.

In a possible implementation, that the first moment is a moment the first duration after an end moment of receiving the PSFCH includes:
that the first moment is a next symbol the first duration after the end moment of receiving the PSFCH.

In a possible implementation, the processing unit is further configured to:

determine the first duration based on a quantity of PSFCHs received in a slot; or
determine the first duration based on a quantity of resource blocks RBs that are received in a slot and that are used for PSFCH transmission.

In a possible implementation, the processing unit is further configured to:
determine the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_c,$$

where
$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

In a possible implementation, the PSFCH is located on any one of the following types of frequency domain resources:

one or more resource pools; or
one or more carriers; or

one or more frequency bands; or
one or more frequency band combinations.

According to a sixth aspect, an embodiment of application provides a network device. The network device includes:

a processing unit, configured to determine a first duration; and
a transceiver unit, configured to receive a physical uplink control channel PUCCH or a physical uplink shared channel PUSCH not earlier than a first moment, where the first moment is a moment the first duration after an end moment of receiving a physical sidelink feedback channel PSFCH by a terminal device.

In a possible implementation, that the first moment is a moment the first duration after an end moment of receiving a PSFCH by a terminal device includes:
that the first moment is a next symbol the first duration after the end moment of receiving the PSFCH by the terminal device.

In a possible implementation, the processing unit is further configured to:

determine the first duration based on a quantity of PSFCHs received by the terminal device in a slot; or
determine the first duration based on a quantity of resource blocks RBs that are received by the terminal device in a slot and that are used for PSFCH transmission.

In a possible implementation, the processing unit is further configured to:
determine the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_c,$$

where
$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

According to a seventh aspect, an embodiment of this application provides a communication apparatus. The apparatus includes a processor and a memory. The memory stores a computer program. The processor executes the computer program stored in the memory, to enable the apparatus to perform the information sending method according to any implementation of the first aspect.

According to an eighth aspect, an embodiment of this application provides a communication apparatus. The apparatus includes a processor and a memory. The memory stores a computer program. The processor executes the computer program stored in the memory, to enable the apparatus to perform the information receiving method according to any implementation of the second aspect.

According to a ninth aspect, an embodiment of this application provides a communication apparatus. The apparatus includes a processor and an interface circuit.

The interface circuit is configured to receive code instructions and transmit the code instructions to the processor.

The processor is configured to run the code instructions to perform the information sending method according to any implementation of the first aspect.

According to a tenth aspect, an embodiment of this application provides a communication apparatus. The apparatus includes a processor and an interface circuit.

The interface circuit is configured to receive code instructions and transmit the code instructions to the processor.

The processor is configured to run the code instructions to perform the information receiving method according to any implementation of the second aspect.

It may be understood that for beneficial effects of the third aspect, the fourth aspect, the fifth aspect, the sixth aspect, the seventh aspect, the eighth aspect, the ninth aspect, and the tenth aspect, refer to beneficial effects of the information sending method according to the first aspect or the information receiving method according to the second aspect. Details are not described herein again.

According to an eleventh aspect, an embodiment of this application provides an information sending method. The method is applied to a first terminal device, and the method includes:

determining a length of a selection window based on capability information of the first terminal device; and
sending a physical sidelink control channel PSCCH and/or a physical sidelink shared channel PSSCH to a second terminal device.

This embodiment of this application relates to the field of vehicle-to-everything (vehicle-to-everything, V2X) technologies. When obtaining a resource in a sensing manner through a sensing window, the first terminal device determines the length of the selection window based on the capability information of the first terminal device. In other words, lengths, of selection windows, determined based on different capability information of different terminal devices are different, and lengths of selection windows can be distinguished based on different capabilities of UEs. It can be ensured that the terminal device may have sufficient time to determine resources/a resource of the PSCCH and/or the PSSCH, so that the PSCCH and/or the PSSCH can be successfully sent to the second terminal device.

In a possible implementation, the capability information of the first terminal device includes at least one of the following:

a quantity of physical sidelink feedback channels PSFCHs received at a same moment;
a quantity of PSFCHs received in a time unit;
a quantity of PSFCHs received in a different communication type;
a quantity of resource blocks RBs that are received in a time unit and that are used for PSFCH transmission;
a quantity of subchannels that are sent in a time unit and that are used for PSCCH and PSSCH transmission; or
a quantity of terminal devices that are in a group and that can perform communication.

In this embodiment of this application, the capability information of the first terminal device is determined based on the quantity of physical sidelink feedback channels PSFCHs received at the same moment, the quantity of PSFCHs received in the time unit, the quantity of PSFCHs received in the different communication type, the quantity of resource blocks RBs that are received in the time unit and that are used for PSFCH transmission, or the quantity of terminal devices that are in the group and that can perform communication, so that the length of the selection window is determined based on a processing capability of the terminal device. It can be ensured that the terminal device may have sufficient time to determine the resources/resource of the PSCCH and/or the PSSCH, so that the PSCCH and/or the PSSCH can be successfully sent to the second terminal device.

In a possible implementation, the quantity of PSFCHs received in the time unit includes one of the following:

a quantity of PSFCHs that are in a resource pool and that are detected in the time unit;
a quantity of PSFCHs that are in a frequency band combination and that are detected in the time unit;
a quantity of PSFCHs that are in a frequency band and that are detected in the time unit; or
a quantity of PSFCHs that are on a carrier and that are detected in the time unit.

In this embodiment of this application, the PSFCH received by the first terminal device may be located in the resource pool, on the carrier, in the frequency band, or in the frequency band combination. Therefore, the length of the selection window is determined based on the quantity of PSFCHs received in the time unit. It can be ensured that the terminal device may have sufficient time to determine the resources/resource of the PSCCH and/or the PSSCH, so that the PSCCH and/or the PSSCH can be successfully sent to the second terminal device.

In a possible implementation, the quantity of resource blocks RBs that are received in the time unit and that are used for PSFCH transmission includes one of the following:

a quantity of resource blocks RBs that are in a resource pool, that are received in the time unit, and that are used for PSFCH transmission;
a quantity of resource blocks RBs that are in a frequency band combination, that are received in the time unit, and that are used for PSFCH transmission;
a quantity of resource blocks RBs that are in a frequency band, that are received in the time unit, and that are used for PSFCH transmission; or
a quantity of resource blocks RBs that are on a carrier, that are received in the time unit, and that are used for PSFCH transmission.

In this embodiment of this application, the resource block RB that is received by the first terminal device and that is used for PSFCH transmission may be located in the resource pool, on the carrier, in the frequency band, or in the frequency band combination. Therefore, the length of the selection window is determined based on the quantity of resource blocks RBs that are received in the time unit and that are used for PSFCH transmission. It can be ensured that the terminal device may have sufficient time to determine the resources/resource of the PSCCH and/or the PSSCH, so that the PSCCH and/or the PSSCH can be successfully sent to the second terminal device.

In a possible implementation, the quantity of subchannels that are sent in the time unit and that are used for PSCCH and PSSCH transmission includes one of the following:

a quantity of subchannels that are in a resource pool, that are sent in the time unit, and that are used for PSCCH and PSSCH transmission;
a quantity of subchannels that are in a frequency band combination, that are sent in the time unit, and that are used for PSCCH and PSSCH transmission;
a quantity of subchannels that are in a frequency band, that are sent in the time unit, and that are used for PSCCH and PSSCH transmission; or
a quantity of subchannels that are on a carrier, that are sent in the time unit, and that are used for PSCCH and PSSCH transmission.

In this embodiment of this application, the subchannel that is sent by the first terminal device in the time unit and that is used for PSCCH and PSSCH transmission may be located in the resource pool, on the carrier, in the frequency band, or in the frequency band combination. Therefore, the length of the selection window is determined based on the quantity of subchannels that are sent in the time unit and that are used for PSCCH and PSSCH transmission. It can be ensured that the terminal device may have sufficient time to determine the resources/resource of the PSCCH and/or the PSSCH, so that the PSCCH and/or the PSSCH can be successfully sent to the second terminal device.

In a possible implementation, the determining a length of a selection window based on capability information of the first terminal device includes:
determining, based on a quantity X1 of PSFCHs received by the first terminal device in the time unit, that a length of the selection window is Y1 time units, and determining, based on a quantity X2 of PSFCHs received by the first terminal device in the time unit, that a length of the selection window is Y2 time units, where when X1>X2, Y1>Y2; and X1, X2, Y1, and Y2 are natural numbers.

In this embodiment of this application, a larger quantity of PSFCHs received by the first terminal device in the time unit indicates a longer length of the selection window determined by the first terminal device. Therefore, it can be ensured that the terminal device may have sufficient time to determine the resources/resource of the PSCCH and/or the PSSCH, so that the PSCCH and/or the PSSCH can be successfully sent to the second terminal device.

In a possible implementation, the determining a length of a selection window based on capability information of the first terminal device includes:
determining, based on a quantity X1 of resource blocks RBs that are received by the first terminal device in the time unit and that are used for PSFCH transmission, that a length of the selection window is Y1 time units, and determining, based on a quantity X2 of resource blocks RBs that are received by the first terminal device in the time unit and that are used for PSFCH transmission, that a length of the selection window is Y2 time units, where when X1>X2, Y1>Y2; and X1, X2, Y1, and Y2 are natural numbers.

In this embodiment of this application, a larger quantity of resource blocks RBs that are received by the first terminal device in the time unit and that are used for PSFCH transmission indicates a longer length of the selection window determined by the first terminal device. Therefore, it can be ensured that the terminal device may have sufficient time to determine the resources/resource of the PSCCH and/or the PSSCH, so that the PSCCH and/or the PSSCH can be successfully sent to the second terminal device.

In a possible implementation, the determining a length of a selection window based on capability information of the first terminal device includes:
determining, based on a quantity X1 of subchannels that are sent by the first terminal device in the time unit and that are used for PSCCH and PSSCH transmission, that a length of the selection window is Y1 time units, and determining, based on a quantity X2 of subchannels that are sent by the first terminal device in the time unit and that are used for PSCCH and PSSCH transmission, that a length of the selection window is Y2 time units, where when X1>X2, Y1>Y2; and X1, X2, Y1, and Y2 are natural numbers.

In this embodiment of this application, a larger quantity of subchannels that are sent by the first terminal device in the time unit and that are used for PSCCH and PSSCH transmission indicates a longer length of the selection window determined by the first terminal device. Therefore, it can be ensured that the terminal device may have sufficient time to determine the resources/resource of the PSCCH and/or the PSSCH, so that the PSCCH and/or the PSSCH can be successfully sent to the second terminal device.

In a possible implementation, the determining a length of a selection window based on capability information of the first terminal device includes:

determining, based on a quantity X1 of terminal devices that are in the group and that can perform communication with the first terminal device, that a length of the selection window is Y1 time units, and determining, based on a quantity X2 of terminal devices that are in the group and that can perform communication with the first terminal device, that a length of the selection window is Y2 time units, where when X1>X2, Y1>Y2; and X1, X2, Y1, and Y2 are natural numbers.

In this embodiment of this application, a larger quantity of terminal devices that are in the group and that can perform communication with the first terminal device indicates a longer length of the selection window determined by the first terminal device. Therefore, it can be ensured that the terminal device may have sufficient time to determine the resources/resource of the PSCCH and/or the PSSCH, so that the PSCCH and/or the PSSCH can be successfully sent to the second terminal device.

According to a twelfth aspect, an embodiment of this application provides an information sending apparatus. The apparatus includes:

a processing unit, configured to determine a length of a selection window based on capability information of a first terminal device; and
a transceiver unit, configured to send a physical sidelink control channel PSCCH and/or a physical sidelink shared channel PSSCH to a second terminal device.

In a possible implementation, the capability information of the first terminal device includes at least one of the following:

a quantity of physical sidelink feedback channels PSFCHs received at a same moment;
a quantity of PSFCHs received in a time unit;
a quantity of PSFCHs received in a different communication type;
a quantity of resource blocks RBs that are received in a time unit and that are used for PSFCH transmission;
a quantity of subchannels that are sent in a time unit and that are used for PSCCH and PSSCH transmission; or
a quantity of terminal devices that are in a group and that can perform communication.

In a possible implementation, the quantity of PSFCHs received in the time unit includes one of the following:

a quantity of PSFCHs that are in a resource pool and that are detected in the time unit;
a quantity of PSFCHs that are in a frequency band combination and that are detected in the time unit;
a quantity of PSFCHs that are in a frequency band and that are detected in the time unit; or
a quantity of PSFCHs that are on a carrier and that are detected in the time unit.

In a possible implementation, the quantity of resource blocks RBs that are received in the time unit and that are used for PSFCH transmission includes one of the following:

a quantity of resource blocks RBs that are in a resource pool, that are received in the time unit, and that are used for PSFCH transmission;
a quantity of resource blocks RBs that are in a frequency band combination, that are received in the time unit, and that are used for PSFCH transmission;
a quantity of resource blocks RBs that are in a frequency band, that are received in the time unit, and that are used for PSFCH transmission; or
a quantity of resource blocks RBs that are on a carrier, that are received in the time unit, and that are used for PSFCH transmission.

In a possible implementation, the quantity of subchannels that are sent in the time unit and that are used for PSCCH and PSSCH transmission includes one of the following:

a quantity of subchannels that are in a resource pool, that are sent in the time unit, and that are used for PSCCH and PSSCH transmission;
a quantity of subchannels that are in a frequency band combination, that are sent in the time unit, and that are used for PSCCH and PSSCH transmission;
a quantity of subchannels that are in a frequency band, that are sent in the time unit, and that are used for PSCCH and PSSCH transmission; or

a quantity of subchannels that are on a carrier, that are sent in the time unit, and that are used for PSCCH and PSSCH transmission.

In a possible implementation, the processing unit is specifically configured to:
determine, based on a quantity X1 of PSFCHs received by the first terminal device in the time unit, that a length of the selection window is Y1 time units, and determine, based on a quantity X2 of PSFCHs received by the first terminal device in the time unit, that a length of the selection window is Y2 time units, where when X1>X2, Y1>Y2; and X1, X2, Y1, and Y2 are natural numbers.

In a possible implementation, the processing unit is specifically configured to:
determine, based on a quantity X1 of resource blocks RBs that are received by the first terminal device in the time unit and that are used for PSFCH transmission, that a length of the selection window is Y1 time units, and determine, based on a quantity X2 of resource blocks RBs that are received by the first terminal device in the time unit and that are used for PSFCH transmission, that a length of the selection window is Y2 time units, where when X1>X2, Y1>Y2; and X1, X2, Y1, and Y2 are natural numbers.

In a possible implementation, the processing unit is specifically configured to:
determine, based on a quantity X1 of subchannels that are sent by the first terminal device in the time unit and that are used for PSCCH and PSSCH transmission, that a length of the selection window is Y1 time units, and determine, based on a quantity X2 of subchannels that are sent by the first terminal device in the time unit and that are used for PSCCH and PSSCH transmission, that a length of the selection window is Y2 time units, where when X1>X2, Y1>Y2; and X1, X2, Y1, and Y2 are natural numbers.

In a possible implementation, the processing unit is specifically configured to:
determine, based on a quantity X1 of terminal devices that are in the group and that can perform communication with the first terminal device, that a length of the selection window is Y1 time units, and determine, based on a quantity X2 of terminal devices that are in the group and that can perform communication with the first terminal device, that a length of the selection window is Y2 time units, where when X1>X2, Y1>Y2; and X1, X2, Y1, and Y2 are natural numbers.

According to a thirteenth aspect, an embodiment of this application provides a communication apparatus. The apparatus includes a processor and a memory. The memory stores a computer program. The processor executes the computer program stored in the memory, to enable the apparatus to perform the information sending method according to any implementation of the eleventh aspect.

According to a fourteenth aspect, an embodiment of this application provides a communication apparatus. The apparatus includes a processor and an interface circuit.

The interface circuit is configured to receive code instructions and transmit the code instructions to the processor.

The processor is configured to run the code instructions to perform the information sending method according to any implementation of the eleventh aspect.

## BRIEF DESCRIPTION OF DRAWINGS

FIG. 1 is a schematic diagram of a V2X scenario according to an embodiment of this application;
FIG. 2 is a schematic diagram of scenarios in a PC5 interface communication mechanism according to an embodiment of this application;
FIG. 3 is a schematic diagram of scenarios in a Uu interface communication mechanism according to an embodiment of this application;
FIG. 4 is a schematic flowchart of an information sending method according to an embodiment of this application;
FIG. 5 is a schematic diagram of a principle of an information sending method according to an embodiment of this application;
FIG. 6 is a schematic flowchart of an information receiving method according to an embodiment of this application;
FIG. 7 is a schematic flowchart of another embodiment of an information sending method according to this application;
FIG. 8 is a schematic diagram of a principle of another embodiment of an information sending method according to this application;
FIG. 9 is a schematic structural diagram of an information sending apparatus according to an embodiment of this application;
FIG. 10 is a schematic structural diagram of an information receiving apparatus according to an embodiment of this application;
FIG. 11 is a schematic structural diagram of a terminal device according to an embodiment of this application;
FIG. 12 is a schematic structural diagram of a network device according to an embodiment of this application;

FIG. 13 is a schematic structural diagram of a communication apparatus according to an embodiment of this application;

FIG. 14 is a schematic structural diagram of another embodiment of a communication apparatus according to this application;

FIG. 15 is a schematic structural diagram of another embodiment of a communication apparatus according to this application;

FIG. 16 is a schematic structural diagram of another embodiment of a communication apparatus according to this application;

FIG. 17 is a schematic structural diagram of another embodiment of an information sending apparatus according to this application;

FIG. 18 is a schematic structural diagram of another embodiment of a communication apparatus according to this application; and

FIG. 19 is a schematic structural diagram of another embodiment of a communication apparatus according to this application.

## DETAILED DESCRIPTION OF EMBODIMENTS

The following describes embodiments of this application with reference to the accompanying drawings in the embodiments of this application.

In this specification, claims, and accompanying drawings of this application, terms "first", "second", "third", "fourth" and the like are intended to distinguish between different objects but do not indicate a particular order. In addition, terms "including", "having", or any other variant thereof, are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in this specification means that a particular characteristic, structure, or feature described with reference to the embodiments may be included in at least one embodiment of this application. The phrase shown in various locations in this specification may not necessarily refer to a same embodiment, and is not an independent or optional embodiment exclusive from another embodiment. It is explicitly and implicitly understood by persons skilled in the art that the embodiments described in this specification may be combined with another embodiment.

Terms such as "component", "module", and "system" used in this specification are used to indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As shown in the figures, both an application running on a computing device and the computing device may be components. One or more components may reside within a process and/or an execution thread, and the components may be located on one computer and/or distributed between two or more computers. In addition, these components may be executed on various computer-readable media that store various data structures. For example, the components may communicate by using a local and/or remote process and based on a signal having one or more data packets (for example, data from two components interacting with another component in a local system and/or a distributed system, and/or across a network such as the internet interacting with other systems by using the signal).

A terminal device in the embodiments of this application may also be referred to as user equipment (user equipment, UE), a mobile station (mobile station, MS), a mobile terminal (mobile terminal, MT), or the like, and is a device that provides a user with voice and/or data connectivity, for example, a handheld device or a vehicle-mounted device having a wireless connection function. For example, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or a vehicle having a driving domain controller.

A network device in the embodiments of this application is a device in a wireless network, for example, a radio access network (radio access network, RAN) node that connects a terminal device to the wireless network. Currently, for example, the RAN node may be a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or a wireless fidelity (wireless fidelity, Wi-Fi) access point (access point, AP). In a network structure, the network device may be a centralized unit (centralized unit, CU) node, a distributed unit (distributed unit, DU) node, or a RAN device including a CU node and a DU node.

Wireless communication scenarios to which an information sending method and an information receiving method provided in the embodiments of this application are applied may include communication scenarios, such as a 5G system, a Wi-Fi system, and an internet of vehicles V2X system, that relate to a sidelink (sidelink) technology. Using V2X as an example, communication between terminal devices (for example, vehicles) may be performed on an SL, and a network device (for example, a base station) may control, by using a downlink, communication of the terminal device on the sidelink.

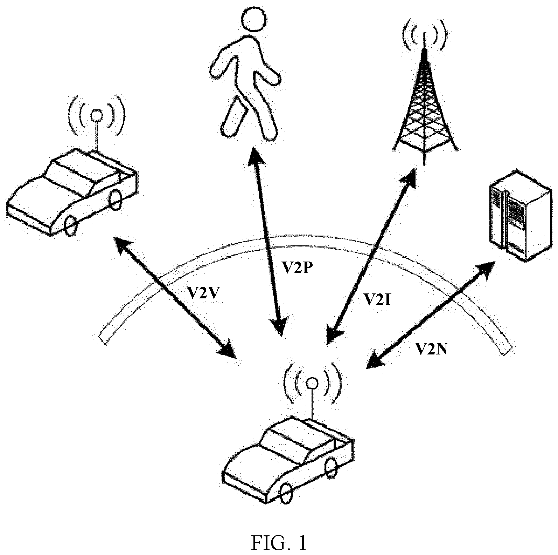

FIG. 1 is a schematic diagram of a V2X scenario according to an embodiment of this application. As shown in FIG. 1, V2X is a technology for implementing communication between a vehicle and an outside world, and X may represent a vehicle, a pedestrian, an infrastructure, a network, or the like. In other words, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

In the V2V communication, terminal devices that communicate with each other may be located in two vehicles, and may be handheld devices, vehicle-mounted devices, or the like of users in the vehicles. In the V2I communication, terminal devices that communicate with each other may be located in a vehicle and an infrastructure. For example, a terminal device may be a handheld device or a vehicle-mounted device of a user in the vehicle, and another terminal device may be a road side unit (road side unit, RSU). The RSU may be understood as an infrastructure entity that supports a V2X application, and may exchange information with another terminal device that supports V2X communication. In the V2P communication, terminal devices that communicate with each other may be located in a vehicle and on a pedestrian. In the V2N communication, terminal devices that communicate with each other may be located in a vehicle and a server. In conclusion, a form of a terminal device is not limited in this application, and forms of terminal devices that communicate with each other may be the same or may be different.

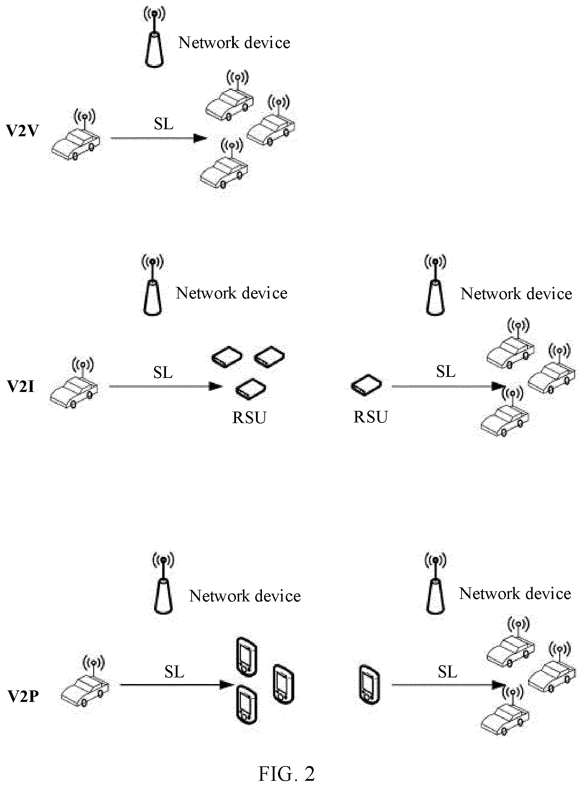

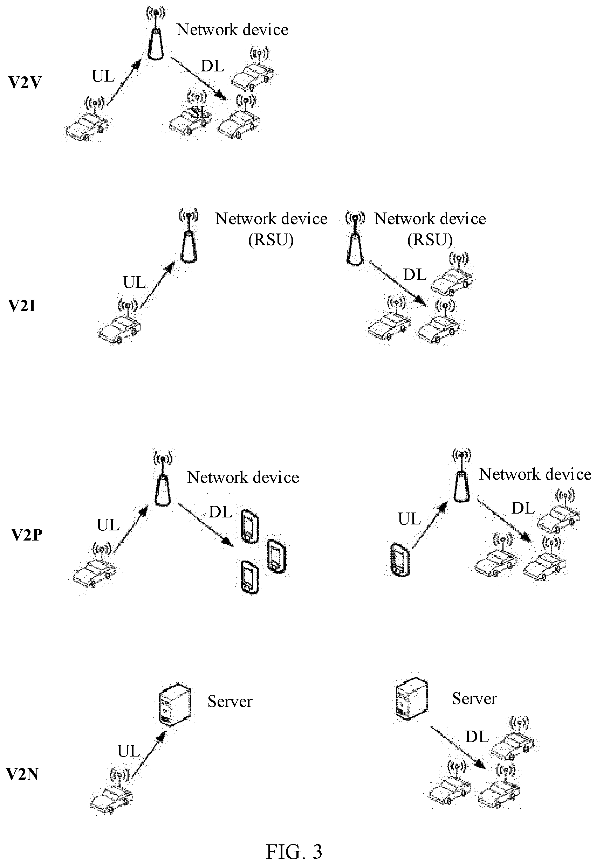

Currently, the V2X communication may be implemented by using two communication mechanisms (which may also be referred to as communication modes). One is a PC5 interface-based communication mechanism, and the other is a Uu interface-based communication mechanism. FIG. 2 and FIG. 3 are respectively a schematic diagram of scenarios in the PC5 interface communication mechanism and a schematic diagram of scenarios in the Uu interface communication mechanism. A PC5 interface is an interface for direct communication between terminal devices. As shown in FIG. 2, in this case, terminal devices directly communicate with each other through a PC5 interface. The communication standard may also be referred to as a V2X sidelink (SL) communication standard. In this case, a terminal device may communicate with another terminal within cell coverage or outside cell coverage. A network device configures a V2X resource for the terminal device (In other words, the network device grants a V2X resource for the terminal device). The terminal device performs V2X SL communication through a PC5 interface by using the resource (or referred to as a grant) configured by the network device. A Uu interface is a communication interface between a terminal device and a network device. As shown in FIG. 3, in this case, terminal devices communicate with each other through a network. In other words, a network device forwards, to a terminal, information that is from another terminal device. For example, V2X data of a terminal device (a transmit end) is sent to a RAN device through a Uu interface, and the V2X data is further sent to a target terminal device (a receive end) through the RAN device. In this case, the terminal device communicates with the network device within cell coverage by using a resource configured by the network device for the terminal device. In a V2I scenario, an RSU may be located in a network device, or may be independent of a network device, and communicate with a terminal device through the network device. In a V2N scenario, a server may be located on a RAN side, or may be located on a CN side, or may be located in an external network, and communicate with a terminal device through a RAN and a CN.

The information sending method and the information receiving method provided in the embodiments of this application are mainly for the technical scenarios in the SL communication standard in FIG. 2. A terminal device may work in a mode 1 or a mode 2.

In the mode 1, a resource of a sidelink is allocated by a network device (for example, a base station). At the same time, for sidelink communication between terminal devices (for example, UEs), a similar HARQ feedback mechanism is also used to determine whether sending of sidelink data (for example, a physical sidelink shared channel (Pysical Sidelink Share Channel, PSSCH)) succeeds. If receive end UE does not receive the data or CRC check on the data fails, the receive end UE feeds back NACK information, for example, feeds back the NACK information by using a physical sidelink feedback channel (Physical Sidelink Feedback Channel, PSFCH). After receiving the NACK fed back by the receive end UE, transmit end UE retransmits the sidelink data. In this case, a PSSCH retransmission resource of the transmit end UE working in the mode 1 also needs to be scheduled by the network device. Therefore, the transmit end UE feeds back HARQ information of the sidelink to the network device, for example, feeds back the HARQ information by using a PUCCH or a PUSCH. After receiving the HARQ information, the network device knows whether the transmit end UE needs to know the retransmission resource.

In the mode 2, a terminal device may obtain a resource in a sensing sensing window manner. Two different windows are defined in a protocol: a sensing window (sensing window) and a selection window (selection window). The terminal device measures a reference signal received power (Reference Signal Receiving Power, RSRP) value of a corresponding resource and parses corresponding sidelink control information (Sidelink Control Information, SCI) in the sensing window; and determines, in the selection window, the resource used to send a PSCCH/PSSCH.

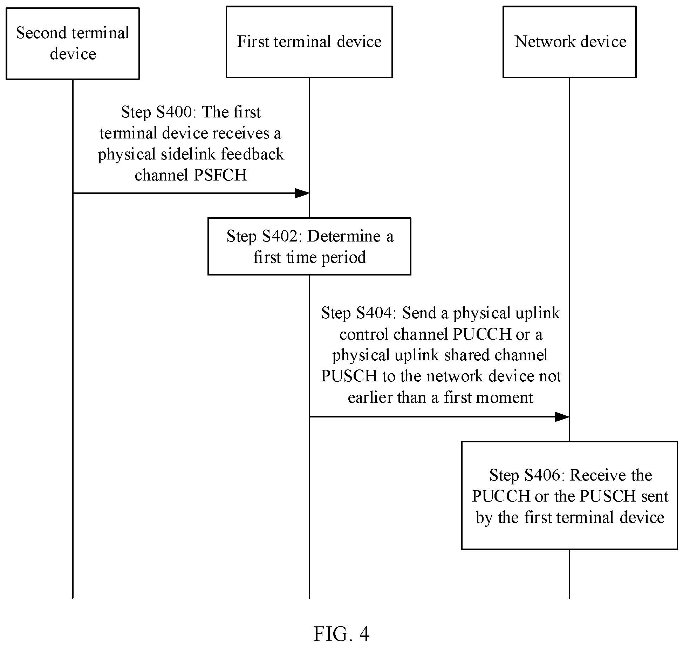

With reference to a schematic flowchart, shown in FIG. 4, of an information sending method according to an embodiment of this application, the following first describes, for a terminal device working in the mode 1, how to send information in the embodiments of this application. The following steps may be included.

Step S400: A first terminal device receives a physical sidelink feedback channel PSFCH.

Specifically, communication between the first terminal device and a second terminal device is performed on an SL. In a communication process between the first terminal device and the second terminal device, the first terminal device may receive the PSFCH sent by the second terminal device. The PSFCH may be used to transmit sidelink HARQ feedback information. For example, when sidelink data sent by the first terminal device is not successfully received by the second terminal device or CRC check fails, the second terminal device may transmit NACK information on the sent PSFCH. When the second terminal device successfully receives sidelink data sent by the first terminal device or CRC check succeeds, the second terminal device may transmit ACK information on the sent PSFCH.

The first terminal device may receive, on one PSFCH, HARQ feedback information from one or more second terminal devices, or may receive, on a plurality of PSFCHs, HARQ feedback information from one or more second terminal devices. One second terminal device may transmit ACK information or NACK information on one PSFCH, or may transmit only NACK information on one PSFCH. Correspondingly, when ACK information or NACK information is transmitted on one PSFCH, cyclic shift values used for the ACK and the NACK are different.

Step S402: The first terminal device determines a first duration.

Specifically, the first duration is used to control or set a shortest time period for the first terminal device to process the received SL HARQ feedback information and generate a HARQ codebook after receiving the PSFCH.

Step S404: The first terminal device sends a physical uplink control channel PUCCH or a physical uplink shared channel PUSCH to a network device not earlier than a first moment.

Specifically, the first moment is a moment the first duration after an end moment of receiving the PSFCH by the first terminal device.

In a possible implementation, the first moment in this embodiment of this application may be a next symbol the first duration after the end moment of receiving the PSFCH. For example, the symbol may be an orthogonal frequency division multiplexing (Orthogonal Frequency Division Multiplexing, OFDM) symbol. Each slot of a new radio (New Radio, NR) system or a long term evolution (Long Term Evolution, LTE) system may include a specific quantity of OFDM symbols including a cyclic prefix (CP).

Step S406: The network device receives the PUCCH or the PUSCH sent by the first terminal device.

Specifically, the network device receives the PUCCH or the PUSCH, and if there is HARQ information transmitted on the PUCCH or the PUSCH, the network device knows that the first terminal device needs a retransmission resource, and configures the retransmission resource for the first terminal device.

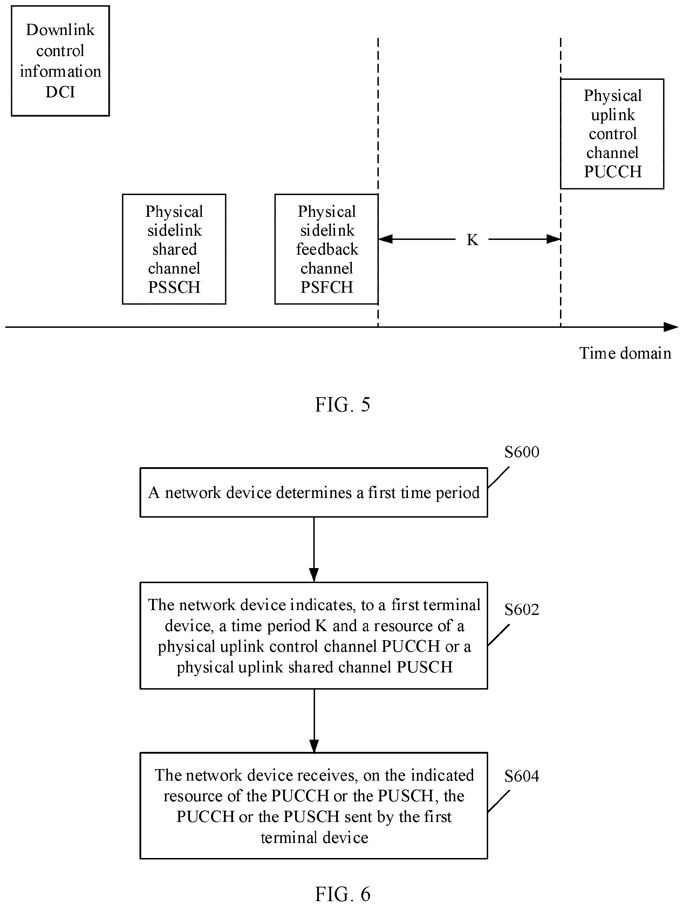

With reference to a schematic diagram, shown in FIG. 5, of a principle of an information sending method according to an embodiment of this application, descriptions are provided from a perspective of a terminal device (that is, the first terminal device) at a transmit end.

The first terminal device may receive downlink control information (Downlink Control Information, DCI) delivered by the network device, where the DCI is carried on a physical downlink control channel (Physical Downlink Control Channel, PDCCH), the DCI is used to schedule PSCCH and PSSCH transmission, and the DCI may include sidelink resource allocation information, HARQ process information, PUCCH resource indication information, time sequence indication information between a PSFCH and a PUCCH, and the like.

The first terminal device sends a PSSCH/PSCCH to the second terminal device based on the DCI. In addition, after receiving the PSFCH sent by the second terminal device, the first terminal device sends the PUCCH or the PUSCH to the network device after a time period K. A resource of the PUCCH or the PUSCH is indicated by the DCI. The time period K is indicated by the DCI, and the DCI indicates that the time period K cannot be less than the first duration. The first duration is a time period determined by the first terminal device after the first terminal device receives the PSFCH.

A start symbol of the PUCCH or the PUSCH cannot be earlier than the first moment, and the first moment is the first symbol the first duration after the end moment of receiving the PSFCH by the first terminal device.

The time period K is one or more slots.

In a possible implementation, determining the first duration in step S400 may specifically include: determining the first duration based on a quantity of PSFCHs received in a slot; or determining the first duration based on a quantity of resource blocks RBs that are received in a slot and that are used for PSFCH transmission.

Specifically, in this embodiment of this application, a correspondence between the first duration and a quantity of PSFCHs received by the terminal device in the slot or a correspondence between the first duration and a quantity of resource blocks RBs that are received by the terminal device in the slot and that are used for PSFCH transmission may be preset in a manner such as protocol specification.

For example, the correspondence may be calculated and determined based on an algorithm. An output parameter of the algorithm is the quantity of received PSFCHs or the quantity of resource blocks RBs used for PSFCH transmission, and an output is a length of the first duration.

For another example, the correspondence may be represented in a table form by classifying ranges or intervals of the quantity of received PSFCHs or ranges or intervals of the quantity of resource blocks RBs used for PSFCH transmission. Different ranges or different intervals correspond to different lengths of the first duration. The quantity of received PSFCHs may be used as an example for description, and the correspondence may be shown in the following Table 1:

**Table 1**

| Quantity of PSFCHs simultaneously received in the slot | First duration |
|---|---|
| [n1, n2) | t1 |
| [n2, n3) | t2 |
| ... | ... |
| [nk-1, nk) | tk |

Optionally, a larger quantity of PSFCHs received in the slot indicates a longer length corresponding to the first duration. It should be understood that, when the first terminal device needs to send, on a same PUCCH or a same PUSCH, sidelink HARQ information obtained on PSFCHs received in a plurality of slots, the first duration is determined based on a quantity of PSFCHs simultaneously received in the last slot of the plurality of slots in which the PSFCHs are located.

The quantity of received resource blocks RBs used for PSFCH transmission is used as an example for description, and the correspondence may alternatively be shown in the following Table 2:

**Table 2**

| Quantity of resource blocks RBs that are simultaneously received in the slot and that are used for PSFCH transmission | First duration |
|---|---|
| [n1, n2) | t1 |
| [n2, n3) | t2 |
| ... | ... |
| [nk-1, nk) | tk |

Optionally, a larger quantity of resource blocks RBs that are received in the slot and that are used for PSFCH transmission indicates a longer length of the first duration. It should be understood that, when the first terminal device needs to send, on a same PUCCH or a same PUSCH, sidelink HARQ information obtained on PSFCHs received in a plurality of slots, the first duration is determined based on a quantity of resource blocks RBs that are used for PSFCH transmission and that are simultaneously received in the last slot of the plurality of slots in which the PSFCHs are located.

Therefore, it indicates that the first duration is related to the quantity of PSFCHs received in the slot, or is related to the quantity of RBs used for PSFCH transmission. In addition, the quantity of PSFCHs received in the slot or the quantity of RBs used for PSFCH transmission may indicate a processing capability of the terminal device. Therefore, the first duration is determined based on the processing capability of the terminal device, so that it can be well ensured that the terminal device has sufficient time to process the PUCCH or the PUSCH.

In a possible implementation, in step S400, when the first duration is determined, the first duration may alternatively be specifically determined based on a subcarrier spacing.

Specifically, in this embodiment of this application, a correspondence between the first duration and a subcarrier spacing may be preset in a manner such as protocol specification.

For example, the correspondence may be calculated and determined based on an algorithm. An output parameter of the algorithm is the subcarrier spacing, and an output is a length of the first duration.

For another example, the correspondence may be represented in a table form by classifying different subcarrier spacings that directly correspond to different lengths of the first duration. For example, the correspondence is shown in the following Table 3:

**Table 3**

| Subcarrier spacing | First duration |
|---|---|
| f1 | t1 |
| f1 | t2 |
| ... | ... |
| fk | tk |

It may be set that a larger subcarrier spacing indicates a longer length corresponding to the first duration.

The subcarrier spacing in this embodiment of this application may be one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_C,$$

where

$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

The first time unit $T_c$ may be specifically a basic time unit for NR, and the second time unit $T_s$ may be specifically a basic time unit for LTE.

$N_1$ and $X$ may be specifically shown in two tables. The following Table 4 is used as an example.

**Table 4**

| Subcarrier spacing | $N_1$/Symbol |
|---|---|
| f1 | t1 |
| f1 | t2 |
| ... | ... |
| fk | tk |

It may be set that a larger subcarrier spacing indicates a larger quantity of symbols corresponding to $N_1$.

Table 5 and Table 6 are used as other examples.

**Table 5**

| Subcarrier spacing | $N_1$/Symbol |
|---|---|
| 15 kHz | 14 |
| 30 kHz | 18 |
| 60 kHz | 28 |
| 120 kHz | 32 |

**Table 6**

| Quantity of PSFCHs simultaneously received in the slot | X/Symbol |
|---|---|
| [n1, n2) | t1 |
| [n2, n3) | t2 |
| ... | ... |
| [nk-1, nk) | tk |

Optionally, a larger quantity of PSFCHs simultaneously received in the slot indicates a longer length corresponding to the first duration.

Table 7 is used as another example.

**Table 7**

| Quantity of PSFCHs simultaneously received in the slot | X/Symbol |
|---|---|
| 1- 32 | 0 |
| 33-64 | 1 |

In a possible implementation, the PSFCH in this embodiment of this application may be located on any one of the following types of frequency domain resources:

one or more resource pools; or
one or more carriers; or
one or more frequency bands; or
one or more frequency band combinations.

In this embodiment of this application, the PSFCH received by the terminal device may be located in the one or more resource pools, or on the one or more carriers, or in the one or more frequency bands, or in the one or more frequency band combinations. The first duration is determined based on the quantity of PSFCHs received in the slot, so that it can be well ensured that the terminal device has sufficient time to process the PUCCH or the PUSCH.

With reference to a schematic flowchart, shown in FIG. 6, of an information receiving method according to an embodiment of this application, the following describes, from a perspective of a network device, how to receive information. The following steps may be included.

Step S600: The network device determines a first duration.

Optionally, step S602 may be further performed, and step S602 is: The network device indicates, to a first terminal device, a time period K and a resource of a physical uplink control channel PUCCH or a physical uplink shared channel PUSCH.

Specifically, the network device may send downlink control information to the first terminal device, where the downlink control information includes indication information of the time period K and an indication of the resource of the PUCCH or the PUSCH. The indicated time period K is greater than or equal to the first duration, and is used to indicate that the first terminal device sends the PUCCH or the PUSCH not earlier than a first moment.

The time period K is one or more slots.

Step S604: The network device receives, on the indicated resource of the PUCCH or the PUSCH, the PUCCH or the PUSCH sent by the first terminal device.

In other words, the network device actually receives, earlier than the first moment, the PUCCH or the PUSCH sent by the first terminal device.

Specifically, the first moment is a moment the first duration after an end moment of receiving a physical sidelink feedback channel PSFCH by the terminal device.

In a possible implementation, that the first moment is a moment the first duration after an end moment of receiving a PSFCH by the terminal device includes:

that the first moment is a next symbol the first duration after the end moment of receiving the PSFCH by the terminal device.

In a possible implementation, determining the first duration includes:

determining the first duration based on a quantity of PSFCHs received by the terminal device in a slot; or

determining the first duration based on a quantity of resource blocks RBs that are received by the terminal device in a slot and that are used for PSFCH transmission.

In a possible implementation, determining the first duration includes: determining the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_C,$$

where

$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

For a manner in which the network device determines the first duration, specifically refer to the determining manner in the embodiment of FIG. 4 and FIG. 5. Details are not described herein again.

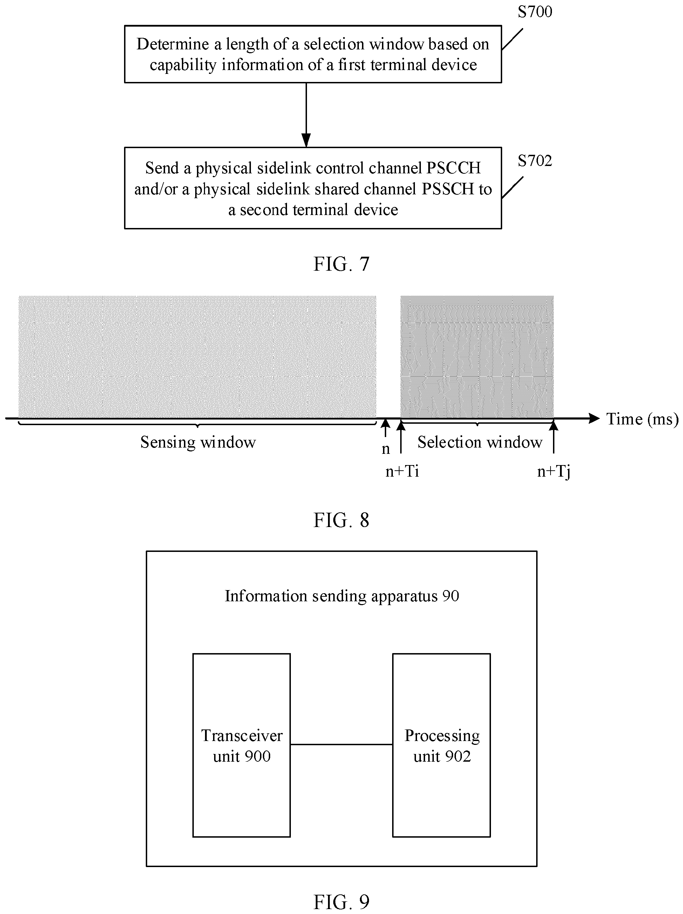

With reference to a schematic flowchart, shown in FIG. 7, of another embodiment of an information sending method according to this application, the following describes, for a terminal device working in the mode 2, how to send information in the embodiments of this application. The following steps may be included.

Step S700: Determine a length of a selection window based on capability information of a first terminal device.

Specifically, the first terminal device determines the length of the selection window based on the capability information of the first terminal device. In this embodiment of this application, a correspondence between capability information of the terminal device and a length of the selection window may be preset in a manner such as protocol specification. The correspondence may be represented in a table form by classifying different levels or intervals that are of the capability information and that correspond to different lengths of the first duration.

Step S702: Send a physical sidelink control channel PSCCH and/or a physical sidelink shared channel PSSCH to a second terminal device.

Specifically, with reference to a schematic diagram, shown in FIG. 8, of a principle of another embodiment of an information sending method according to this application, the first terminal device may measure an RSRP value of a corresponding resource and parse corresponding SCI in a sensing sensing window; then start to determine, through a selection selection window at a moment n+Ti after a time period n, a resource used to send the PSCCH/PSSCH; and determine the resource at a moment n+Tj. In other words, the length of the selection window is Tj-Ti, and the length is determined by the first terminal device based on the capability information of the first terminal device.

In a possible implementation, the capability information of the first terminal device includes at least one of the following:

a quantity of physical sidelink feedback channels PSFCHs received at a same moment;
a quantity of PSFCHs received in a time unit;
a quantity of PSFCHs received in a different communication type;
a quantity of resource blocks RBs that are received in a time unit and that are used for PSFCH transmission;
a quantity of subchannels that are sent in a time unit and that are used for PSCCH and PSSCH transmission; or
a quantity of terminal devices that are in a group and that can perform communication.

The correspondence between capability information of the terminal device and a length of the selection window may be shown in the following Table 8:

**Table 8**

| Capability information of the terminal device | Description of the capability information | Length of the selection window |
|---|---|---|
| Capability 1 | Quantity [n1, n2) of physical sidelink feedback channels PSFCHs received at the same moment | t1 |
| | Quantity [m1, m2) of PSFCHs received in the time unit | |
| | Quantity [p1, p2) of PSFCHs received in the different communication type | |
| | Quantity [r1, r2) of resource blocks RBs that are received in the time unit and that are used for PSFCH transmission | |
| | Quantity [s1, s2) of subchannels that are sent in the time unit and that are used for PSCCH and PSSCH transmission | |
| | Quantity [u1, u2) of terminal devices that are in the group and that can perform communication | |
| Capability 2 | Quantity [n2, n3) of physical sidelink feedback channels PSFCHs received at the same moment | t2 |
| | Quantity [m2, m3) of PSFCHs received in the time unit | |
| | Quantity [p2, p3) of PSFCHs received in the different communication type | |
| | Quantity [r2, r3) of resource blocks RBs that are received in the time unit and that are used for PSFCH transmission | |
| | Quantity [s2, s3) of subchannels that are sent in the time unit and that are used for PSCCH and PSSCH transmission | |
| | Quantity [u2, u3) of terminal devices that are in the group and that can perform communication | |
| ... | ... | ... |

A larger quantity of physical sidelink feedback channels PSFCHs received at the same moment, a larger quantity of PSFCHs received in the time unit, a larger quantity of PSFCHs received in the different communication type, a larger quantity of resource blocks RBs that are received in the time unit and that are used for PSFCH transmission, a larger quantity of subchannels that are sent in the time unit and that are used for PSCCH and PSSCH transmission, or a larger quantity of terminal devices that are in the group and that can perform communication indicates a longer length of the selection window.

In a possible implementation, the quantity of PSFCHs received in the time unit includes one of the following:

a quantity of PSFCHs that are in a resource pool and that are detected in the time unit;
a quantity of PSFCHs that are in a frequency band combination and that are detected in the time unit;
a quantity of PSFCHs that are in a frequency band and that are detected in the time unit; or
a quantity of PSFCHs that are on a carrier and that are detected in the time unit.

In a possible implementation, the quantity of resource blocks RBs that are received in the time unit and that are used for PSFCH transmission includes one of the following:

a quantity of resource blocks RBs that are in a resource pool, that are received in the time unit, and that are used for PSFCH transmission;
a quantity of resource blocks RBs that are in a frequency band combination, that are received in the time unit, and that are used for PSFCH transmission;
a quantity of resource blocks RBs that are in a frequency band, that are received in the time unit, and that are used for PSFCH transmission; or
a quantity of resource blocks RBs that are on a carrier, that are received in the time unit, and that are used for PSFCH transmission.

In a possible implementation, the quantity of subchannels that are sent in the time unit and that are used for PSCCH and PSSCH transmission includes one of the following:

a quantity of subchannels that are in a resource pool, that are sent in the time unit, and that are used for PSCCH and PSSCH transmission;
a quantity of subchannels that are in a frequency band combination, that are sent in the time unit, and that are used for PSCCH and PSSCH transmission;
a quantity of subchannels that are in a frequency band, that are sent in the time unit, and that are used for PSCCH and PSSCH transmission; or
a quantity of subchannels that are on a carrier, that are sent in the time unit, and that are used for PSCCH and PSSCH transmission.

In a possible implementation, determining the length of the selection window based on the capability information of the first terminal device includes:
determining, based on a quantity X1 of PSFCHs received by the first terminal device in the time unit, that a length of the selection window is Y1 time units, and determining, based on a quantity X2 of PSFCHs received by the first terminal device in the time unit, that a length of the selection window is Y2 time units, where when X1>X2, Y1>Y2; and X1, X2, Y1, and Y2 are natural numbers.

In this embodiment of this application, a larger quantity of PSFCHs received by the first terminal device in the time unit indicates a longer length of the selection window determined by the first terminal device. Therefore, it can be ensured that the terminal device may have sufficient time to determine resources/a resource of the PSCCH and/or the PSSCH, so that the PSCCH and/or the PSSCH can be successfully sent to the second terminal device.

In a possible implementation, determining the length of the selection window based on the capability information of the first terminal device includes:
determining, based on a quantity X1 of resource blocks RBs that are received by the first terminal device in the time unit and that are used for PSFCH transmission, that a length of the selection window is Y1 time units, and determining, based on a quantity X2 of resource blocks RBs that are received by the first terminal device in the time unit and that are used for PSFCH transmission, that a length of the selection window is Y2 time units, where when X1>X2, Y1>Y2; and X1, X2, Y1, and Y2 are natural numbers.

In this embodiment of this application, a larger quantity of resource blocks RBs that are received by the first terminal device in the time unit and that are used for PSFCH transmission indicates a longer length of the selection window determined by the first terminal device. Therefore, it can be ensured that the terminal device may have sufficient time to determine resources/a resource of the PSCCH and/or the PSSCH, so that the PSCCH and/or the PSSCH can be successfully sent to the second terminal device.

In a possible implementation, determining the length of the selection window based on the capability information of the first terminal device includes:
determining, based on a quantity X1 of subchannels that are sent by the first terminal device in the time unit and that are used for PSCCH and PSSCH transmission, that a length of the selection window is Y1 time units, and determining, based on a quantity X2 of subchannels that are sent by the first terminal device in the time unit and that are used for PSCCH and PSSCH transmission, that a length of the selection window is Y2 time units, where when X1>X2, Y1>Y2; and X1, X2, Y1, and Y2 are natural numbers.

In this embodiment of this application, a larger quantity of subchannels that are sent by the first terminal device in the time unit and that are used for PSCCH and PSSCH transmission indicates a longer length of the selection window determined by the first terminal device. Therefore, it can be ensured that the terminal device may have sufficient time to determine resources/a resource of the PSCCH and/or the PSSCH, so that the PSCCH and/or the PSSCH can be successfully sent to the second terminal device.

In a possible implementation, determining the length of the selection window based on the capability information of the first terminal device includes:
determining, based on a quantity X1 of terminal devices that are in the group and that can perform communication with the first terminal device, that a length of the selection window is Y1 time units, and determining, based on a quantity X2 of terminal devices that are in the group and that can perform communication with the first terminal device, that a length of the selection window is Y2 time units, where when X1>X2, Y1>Y2; and X1, X2, Y1, and Y2 are natural numbers.

In this embodiment of this application, a larger quantity of terminal devices that are in the group and that can perform communication with the first terminal device indicates a longer length of the selection window determined by the first terminal device. Therefore, it can be ensured that the terminal device may have sufficient time to determine resources/a resource of the PSCCH and/or the PSSCH, so that the PSCCH and/or the PSSCH can be successfully sent to the second terminal device.

The foregoing describes in detail the methods in the embodiments of this application. The following correspondingly provides an information sending apparatus, an information receiving apparatus, a terminal device, a network device, and a communication apparatus in the embodiments of this application.

FIG. 9 is a schematic structural diagram of an information sending apparatus according to an embodiment of this application. The information sending apparatus 90 may include a transceiver unit 900 and a processing unit 902.

The transceiver unit 900 is configured to receive a physical sidelink feedback channel PSFCH.

The processing unit 902 is configured to determine a first duration.

The transceiver unit 900 is further configured to send a physical uplink control channel PUCCH or a physical uplink shared channel PUSCH not earlier than a first moment, where the first moment is a moment the first duration after an end moment of receiving the PSFCH.

In a possible implementation, that the first moment is a moment the first duration after an end moment of receiving the PSFCH includes:

that the first moment is a next symbol the first duration after the end moment of receiving the PSFCH.

In a possible implementation, the processing unit is further configured to:

determine the first duration based on a quantity of PSFCHs received in a slot; or
determine the first duration based on a quantity of resource blocks RBs that are received in a slot and that are used for PSFCH transmission.

In a possible implementation, the processing unit 902 is further configured to:
determine the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_c,$$

where
$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

In a possible implementation, the PSFCH is located on any one of the following types of frequency domain resources:

one or more resource pools; or
one or more carriers; or
one or more frequency bands; or
one or more frequency band combinations.

It may be understood that, for descriptions of the units in the information sending apparatus 90, refer to the embodiment of the information sending method in FIG. 4 and FIG. 5. Details are not described one by one herein again. The information sending apparatus 90 may be an apparatus in the terminal device in the embodiments of this application, or may be the terminal device in the embodiments of this application.

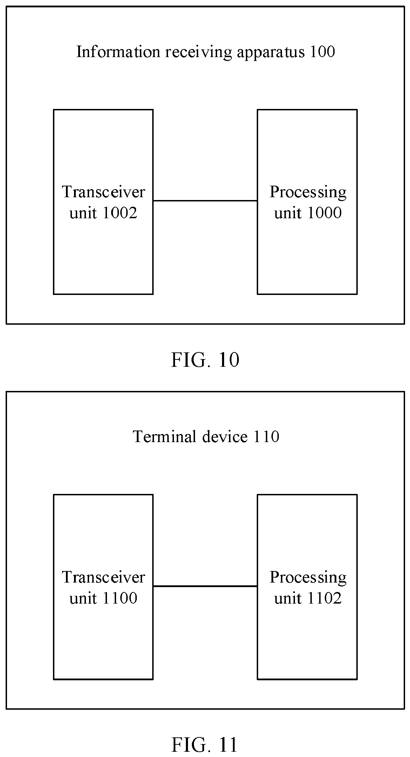

FIG. 10 is a schematic structural diagram of an information receiving apparatus according to an embodiment of this application. The information receiving apparatus 100 may include a processing unit 1000 and a transceiver unit 1002.

The processing unit 1000 is configured to determine a first duration.

The transceiver unit 1002 is configured to receive a physical uplink control channel PUCCH or a physical uplink shared channel PUSCH not earlier than a first moment, where the first moment is a moment the first duration after an end moment of receiving a physical sidelink feedback channel PSFCH by a terminal device.

In a possible implementation, that the first moment is a moment the first duration after an end moment of receiving a PSFCH by a terminal device includes:

that the first moment is a next symbol the first duration after the end moment of receiving the PSFCH by the terminal device.

In a possible implementation, the processing unit 1000 is further configured to:

determine the first duration based on a quantity of PSFCHs received by the terminal device in a slot; or
determine the first duration based on a quantity of resource blocks RBs that are received by the terminal device in a slot and that are used for PSFCH transmission.

In a possible implementation, the processing unit 1000 is further configured to:
determine the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_c,$$

where

$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

It may be understood that, for descriptions of the units in the information receiving apparatus 100, refer to the embodiment of the information receiving method in FIG. 6. Details are not described one by one herein again. The information receiving apparatus 100 may be an apparatus in the network device in the embodiment of this application, or may be the network device in the embodiment of this application.

FIG. 11 is a schematic structural diagram of a terminal device according to an embodiment of this application. The terminal device 110 may include a transceiver unit 1100 and a processing unit 1102.

The transceiver unit 1100 is configured to receive a physical sidelink feedback channel PSFCH.

The processing unit 1102 is configured to determine a first duration.

The transceiver unit 1100 is further configured to send a physical uplink control channel PUCCH or a physical uplink shared channel PUSCH not earlier than a first moment, where the first moment is a moment the first duration after an end moment of receiving the PSFCH.

In a possible implementation, that the first moment is a moment the first duration after an end moment of receiving the PSFCH includes:

that the first moment is a next symbol the first duration after the end moment of receiving the PSFCH.

In a possible implementation, the processing unit is further configured to:

determine the first duration based on a quantity of PSFCHs received in a slot; or
determine the first duration based on a quantity of resource blocks RBs that are received in a slot and that are used for PSFCH transmission.

In a possible implementation, the processing unit 1102 is further configured to:
determine the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or

a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_C,$$

where

$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

In a possible implementation, the PSFCH is located on any one of the following types of frequency domain resources:

one or more resource pools; or
one or more carriers; or
one or more frequency bands; or
one or more frequency band combinations.

It may be understood that, for descriptions of the units in the terminal device 110, refer to the embodiment of the information sending method in FIG. 4 and FIG. 5. Details are not described one by one herein again. The terminal device 110 may be the terminal device in the foregoing method embodiments of this application.

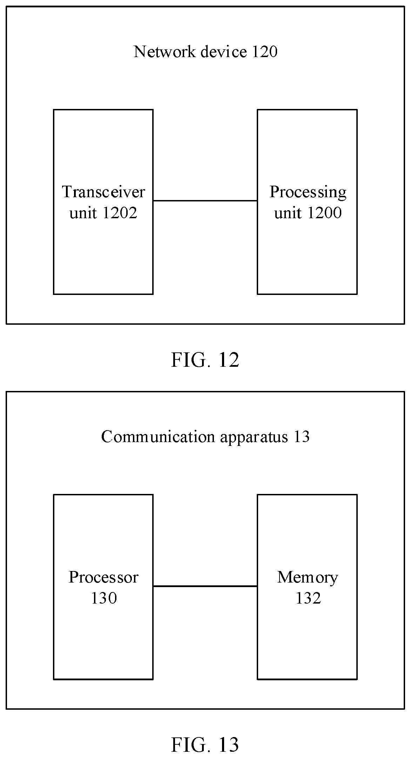

FIG. 12 is a schematic structural diagram of a network device according to an embodiment of this application. The network device 120 may include a processing unit 1200 and a transceiver unit 1202.

The processing unit 1200 is configured to determine a first duration.

The transceiver unit 1202 is configured to receive a physical uplink control channel PUCCH or a physical uplink shared channel PUSCH not earlier than a first moment, where the first moment is a moment the first duration after an end moment of receiving a physical sidelink feedback channel PSFCH by a terminal device.

In a possible implementation, that the first moment is a moment the first duration after an end moment of receiving a PSFCH by a terminal device includes:

that the first moment is a next symbol the first duration after the end moment of receiving the PSFCH by the terminal device.

In a possible implementation, the processing unit 1200 is further configured to:

determine the first duration based on a quantity of PSFCHs received by the terminal device in a slot; or
determine the first duration based on a quantity of resource blocks RBs that are received by the terminal device in a slot and that are used for PSFCH transmission.

In a possible implementation, the processing unit 1200 is further configured to:
determine the first duration based on a subcarrier spacing.

In a possible implementation, the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

In a possible implementation, the first duration satisfies the following relationship:

$$T_1 = (N_1 + X)(2048 + 144) \cdot \kappa 2^{-\mu} \cdot T_C,$$

where

$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

It may be understood that, for descriptions of the units in the network device 120, refer to the embodiment of the information receiving method in FIG. 6. Details are not described one by one herein again. The network device 120 may be the network device in the foregoing method embodiment of this application.

FIG. 13 is a schematic structural diagram of a communication apparatus according to an embodiment of this application. The communication apparatus 13 may include a processor 130 and a memory 132.

The processor 130 may be a general purpose central processing unit (CPU), a microprocessor, an application-specific integrated circuit (application-specific integrated circuit, ASIC), or one or more integrated circuits configured to control execution of the foregoing solutions.

The memory 132 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code or an expected computer program in a form of an instruction or a data structure and that can be accessed by a computer. However, the memory 132 is not limited thereto. The memory 132 may exist independently, and is connected to the processor 130 through a bus. The memory 132 may alternatively be integrated with the processor 130.

The memory 132 is configured to store a computer program for executing the foregoing solutions, and the processor 130 controls the execution. The processor 130 is configured to execute the computer program stored in the memory 132.

Code stored in the memory 132 may be used to perform the steps in the information sending method provided in FIG. 4 and FIG. 5. Specifically, refer to the implementations of the foregoing method embodiments. Details are not described herein again.

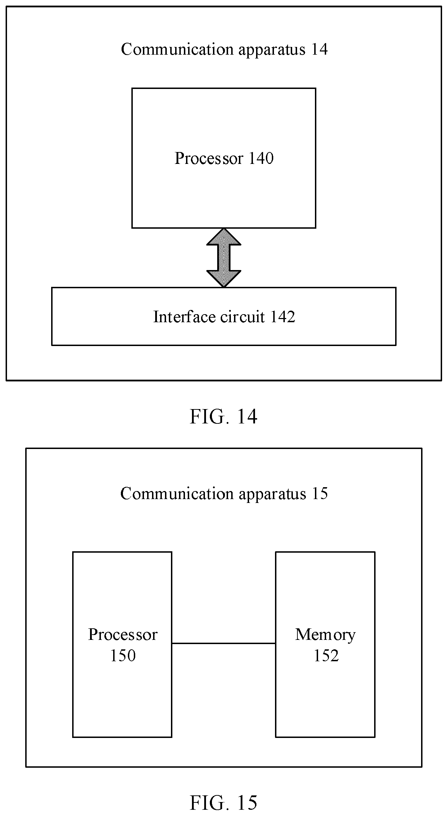

FIG. 14 is a schematic structural diagram of another embodiment of a communication apparatus according to this application. The communication apparatus 14 may include a processor 140 and an interface circuit 142.

The processor 140 may be an integrated circuit chip and has a signal processing capability. In an implementation process, steps in the foregoing method may be implemented by using a hardware integrated logic circuit in the processor 140, or by using instructions in a form of software. The processor 140 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in the embodiments of this application. The general-purpose processor may be a microprocessor, or the processor may be any conventional processor or the like.

The interface circuit 142 may send or receive data, instructions, or information. The processor 140 may process data, instructions, or other information received through the interface circuit 142, and send, through the interface circuit 142, information obtained after processing.

The interface circuit 142 is specifically configured to receive code instructions and transmit the code instructions to the processor.

The processor 140 is specifically configured to run the code instructions to perform the steps in the information sending method provided in FIG. 4 and FIG. 5. Specifically, refer to the implementations of the foregoing method embodiments. Details are not described herein again.

FIG. 15 is a schematic structural diagram of another embodiment of a communication apparatus according to this application. The communication apparatus 15 may include a processor 150 and a memory 152.

The processor 150 may be a general purpose central processing unit (CPU), a microprocessor, an application-specific integrated circuit (application-specific integrated circuit, ASIC), or one or more integrated circuits configured to control execution of the foregoing solutions.

The memory 152 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code or an expected computer program in a form of an instruction or a data structure and that can be accessed by a computer. However, the memory 152 is not limited thereto. The memory 152 may exist independently, and is connected to the processor 150 through a bus. The memory 152 may alternatively be integrated with the processor 150.

The memory 152 is configured to store a computer program for executing the foregoing solutions, and the processor 150 controls the execution. The processor 150 is configured to execute the computer program stored in the memory 152.

Code stored in the memory 152 may be used to perform the steps in the information receiving method provided in FIG. 6. Specifically, refer to the implementations of the foregoing method embodiment. Details are not described herein again.

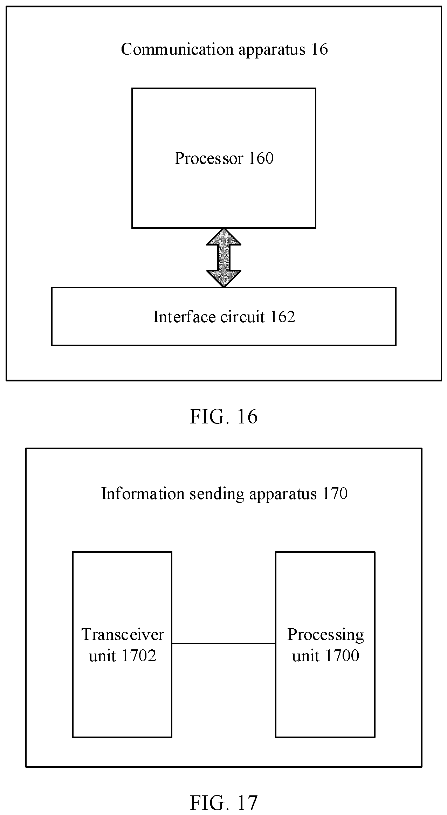

FIG. 16 is a schematic structural diagram of another embodiment of a communication apparatus according to this application. The communication apparatus 16 may include a processor 160 and an interface circuit 162.

The processor 160 may be an integrated circuit chip and has a signal processing capability. In an implementation process, steps in the foregoing method may be implemented by using a hardware integrated logic circuit in the processor 160, or by using instructions in a form of software. The processor 160 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in the embodiments of this application. The general-purpose processor may be a microprocessor, or the processor may be any conventional processor or the like.

The interface circuit 162 may send or receive data, instructions, or information. The processor 160 may process data, instructions, or other information received through the interface circuit 162, and send, through the interface circuit 162, information obtained after processing.

The interface circuit 162 is specifically configured to receive code instructions and transmit the code instructions to the processor.

The processor 160 is specifically configured to run the code instructions to perform the steps in the information receiving method provided in FIG. 6. Specifically, refer to the implementations of the foregoing method embodiment. Details are not described herein again.

FIG. 17 is a schematic structural diagram of another embodiment of an information sending apparatus according to this application. The information sending apparatus 170 may include a processing unit 1700 and a transceiver unit 1702.

The processing unit 1700 is configured to determine a length of a selection window based on capability information of a first terminal device.

The transceiver unit 1702 is configured to send a physical sidelink control channel PSCCH and/or a physical sidelink shared channel PSSCH to a second terminal device.

In a possible implementation, the capability information of the first terminal device includes at least one of the following:

a quantity of physical sidelink feedback channels PSFCHs received at a same moment;
a quantity of PSFCHs received in a time unit;
a quantity of PSFCHs received in a different communication type;
a quantity of resource blocks RBs that are received in a time unit and that are used for PSFCH transmission;
a quantity of subchannels that are sent in a time unit and that are used for PSCCH and PSSCH transmission; or
a quantity of terminal devices that are in a group and that can perform communication.

In a possible implementation, the quantity of PSFCHs received in the time unit includes one of the following:

a quantity of PSFCHs that are in a resource pool and that are detected in the time unit;
a quantity of PSFCHs that are in a frequency band combination and that are detected in the time unit;
a quantity of PSFCHs that are in a frequency band and that are detected in the time unit; or
a quantity of PSFCHs that are on a carrier and that are detected in the time unit.

In a possible implementation, the quantity of resource blocks RBs that are received in the time unit and that are used for PSFCH transmission includes one of the following:

a quantity of resource blocks RBs that are in a resource pool, that are received in the time unit, and that are used for PSFCH transmission;
a quantity of resource blocks RBs that are in a frequency band combination, that are received in the time unit, and that are used for PSFCH transmission;
a quantity of resource blocks RBs that are in a frequency band, that are received in the time unit, and that are used for PSFCH transmission; or
a quantity of resource blocks RBs that are on a carrier, that are received in the time unit, and that are used for PSFCH transmission.

In a possible implementation, the quantity of subchannels that are sent in the time unit and that are used for PSCCH and PSSCH transmission includes one of the following:

a quantity of subchannels that are in a resource pool, that are sent in the time unit, and that are used for PSCCH and PSSCH transmission;
a quantity of subchannels that are in a frequency band combination, that are sent in the time unit, and that are used for PSCCH and PSSCH transmission;
a quantity of subchannels that are in a frequency band, that are sent in the time unit, and that are used for PSCCH and PSSCH transmission; or
a quantity of subchannels that are on a carrier, that are sent in the time unit, and that are used for PSCCH and PSSCH transmission.

In a possible implementation, the processing unit 1700 is specifically configured to:
determine, based on a quantity X1 of PSFCHs received by the first terminal device in the time unit, that a length of the selection window is Y1 time units, and determine, based on a quantity X2 of PSFCHs received by the first terminal device in the time unit, that a length of the selection window is Y2 time units, where when X1>X2, Y1>Y2; and X1, X2, Y1, and Y2 are natural numbers.

In a possible implementation, determining the length of the selection window based on the capability information of the first terminal device includes:
determining, based on a quantity X1 of resource blocks RBs that are received by the first terminal device in the time unit and that are used for PSFCH transmission, that a length of the selection window is Y1 time units, and determining, based on a quantity X2 of resource blocks RBs that are received by the first terminal device in the time unit and that are used for PSFCH transmission, that a length of the selection window is Y2 time units, where when X1>X2, Y1>Y2; and X1, X2, Y1, and Y2 are natural numbers.

In a possible implementation, the processing unit 1700 is specifically configured to:
determine, based on a quantity X1 of subchannels that are sent by the first terminal device in the time unit and that are used for PSCCH and PSSCH transmission, that a length of the selection window is Y1 time units, and determine, based on a quantity X2 of subchannels that are sent by the first terminal device in the time unit and that are used for PSCCH and PSSCH transmission, that a length of the selection window is Y2 time units, where when X1>X2, Y1>Y2; and X1, X2, Y1, and Y2 are natural numbers.

In a possible implementation, the processing unit 1700 is specifically configured to:
determine, based on a quantity X1 of terminal devices that are in the group and that can perform communication with the first terminal device, that a length of the selection window is Y1 time units, and determine, based on a quantity X2 of terminal devices that are in the group and that can perform communication with the first terminal device, that a length of the selection window is Y2 time units, where when X1>X2, Y1>Y2; and X1, X2, Y1, and Y2 are natural numbers.

For descriptions of the units in the information sending apparatus 170, refer to the embodiment of the information receiving method in FIG. 7 and FIG. 8. Details are not described one by one herein again. The information sending apparatus 170 may be an apparatus in the terminal device in the method embodiment of FIG. 7 and FIG. 8, or may be the terminal device in the embodiment of this application.

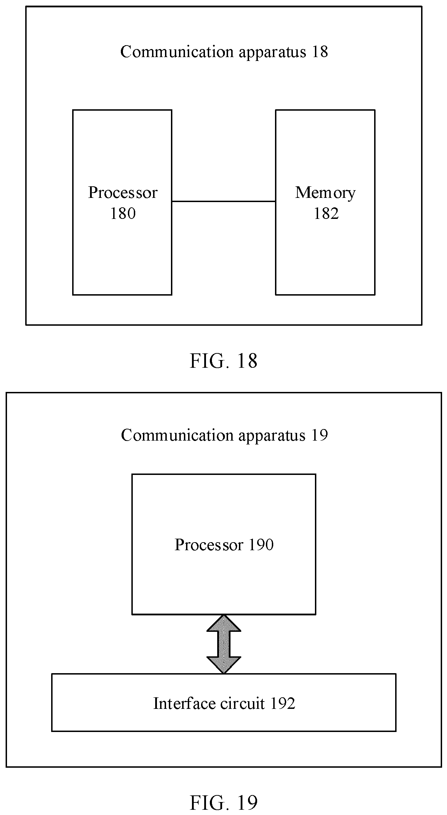

FIG. 18 is a schematic structural diagram of another embodiment of a communication apparatus according to this application. The communication apparatus 18 may include a processor 180 and a memory 182.

The processor 180 may be a general purpose central processing unit (CPU), a microprocessor, an application-specific integrated circuit (application-specific integrated circuit, ASIC), or one or more integrated circuits configured to control execution of the foregoing solutions.

The memory 182 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code or an expected computer program in a form of an instruction or a data structure and that can be accessed by a computer. However, the memory 182 is not limited thereto. The memory 182 may exist independently, and is connected to the processor 180 through a bus. The memory 182 may alternatively be integrated with the processor 180.

The memory 182 is configured to store a computer program for executing the foregoing solutions, and the processor 180 controls the execution. The processor 180 is configured to execute the computer program stored in the memory 182.

Code stored in the memory 182 may be used to perform the steps in the information sending method provided in FIG. 7 and FIG. 8. Specifically, refer to the implementations of the foregoing method embodiment. Details are not described herein again.

FIG. 19 is a schematic structural diagram of another embodiment of a communication apparatus according to this application. The communication apparatus 19 may include a processor 190 and an interface circuit 192.

The processor 190 may be an integrated circuit chip and has a signal processing capability. In an implementation process, steps in the foregoing method may be implemented by using a hardware integrated logic circuit in the processor 190, or by using instructions in a form of software. The processor 190 may be a general purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods and steps that are disclosed in the embodiments of this application. The general-purpose processor may be a microprocessor, or the processor may be any conventional processor or the like.

The interface circuit 192 may send or receive data, instructions, or information. The processor 190 may process data, instructions, or other information received through the interface circuit 192, and send, through the interface circuit 192, information obtained after processing.

The interface circuit 192 is specifically configured to receive code instructions and transmit the code instructions to the processor.

The processor 190 is specifically configured to run the code instructions to perform the steps in the information sending method provided in FIG. 7 and FIG. 8. Specifically, refer to the implementations of the foregoing method embodiment. Details are not described herein again.

The foregoing mainly describes the solutions provided in the embodiments of this application from a perspective of the method implemented by an electronic device. It may be understood that to implement the foregoing functions, each network element, such as the electronic device or the processor, includes a corresponding hardware structure and/or software module for performing each function. Persons skilled in the art should be easily aware that, in combination with the network elements and algorithm steps of the examples described in the embodiments disclosed in this specification, this application may be implemented by hardware or a combination of hardware and computer software. Whether a function is performed by hardware or hardware driven by computer software depends on particular applications and design constraints of the technical solutions. Persons skilled in the art may use different methods to implement the described functions for each particular application, but it should not be considered that the implementation goes beyond the scope of this application.

In the embodiments of this application, the electronic device, the image shooting device, and the like may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, module division is an example, and is merely logical function division. During actual implementation, another division manner may be used.

An embodiment of this application further provides a computer-readable storage medium. All or some of the procedures of the method embodiments may be implemented by a computer program instructing related hardware. The program may be stored in the computer-readable storage medium. When the program is executed, the procedures of the method embodiments may be performed. The computer-readable storage medium includes any medium that can store program code, such as a read-only memory (read-only memory, ROM), a random access memory (random access memory, RAM), a magnetic disk, or an optical disc.

All or some of the foregoing embodiments may be implemented by software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are completely or partially generated. The computer may be a general-purpose computer, a dedicated computer, a computer network, or another programmable apparatus. The computer instructions may be stored in a computer-readable storage medium, or may be transmitted through the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A sequence of the steps of the method in the embodiments of this application may be adjusted, combined, or deleted based on an actual requirement.

The modules in the apparatus in the embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, or make equivalent replacements to some technical features thereof, without departing from the scope of the technical solutions of the embodiments of this application.

**Claims**

1.  An information transmission method, comprising:

    receiving a physical sidelink feedback channel PSFCH;
    determining a first duration; and
    sending a physical uplink control channel PUCCH or a physical uplink shared channel PUSCH not earlier than a first moment, wherein the first moment is a moment the first duration after an end moment of receiving the PSFCH.

2.  The method according to claim 1, wherein that the first moment is a moment the first duration after an end moment of receiving the PSFCH comprises:
    the first moment is the next symbol the first duration after the end moment of receiving the PSFCH.

3.  The method according to claim 1 or 2, wherein the determining a first duration comprises:

    determining the first duration based on a quantity of PSFCHs received in a slot; or
    determining the first duration based on a quantity of resource blocks RBs that are received in a slot and that are used for PSFCH transmission.

4.  The method according to any one of claims 1 to 3, wherein the determining a first duration comprises:
    determining the first duration based on a subcarrier spacing.

5.  The method according to claim 4, wherein the subcarrier spacing is one of the following:

    a subcarrier spacing of the PSFCH;
    a subcarrier spacing of the PUCCH;
    a subcarrier spacing of the PUSCH;
    a smaller value of a subcarrier spacing of the PSFCH and a subcarrier spacing of the PUCCH; or
    a smaller value of a subcarrier spacing of the PSFCH and a subcarrier spacing of the PUSCH.

6.  The method according to any one of claims 1 to 4, wherein the first duration satisfies the following relationship:

$$T_1 = (N_1 + X)(2048 + 144) \cdot \kappa 2^{-\mu} \cdot T_C,$$

    wherein
    $T_1$ is the first duration, $N_1$ is a quantity of symbols that is determined based on the first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

7.  The method according to any one of claims 1 to 6, wherein the PSFCH is located on any one of the following types of frequency domain resources:

    one or more resource pools; or
    one or more carriers; or
    one or more frequency bands; or
    one or more frequency band combinations.

8.  An information transmission method, comprising:
    receiving a physical uplink control channel PUCCH or a physical uplink shared channel PUSCH not earlier than a first moment, wherein the PUCCH or the PUSCH is carrying the HARQ informaiton, the first moment is a moment the first duration after an end moment of receiving a physical sidelink feedback channel PSFCH by a terminal device.

9. The method according to claim 8, wherein that the first moment is a moment the first duration after an end moment of receiving a physical sidelink feedback channel PSFCH by a terminal device comprises:
that the first moment is the next symbol the first duration after the end moment of receiving the PSFCH by the terminal device.

10. The method according to claim 8 or 9, wherein the determining a first duration comprises:

   determining the first duration based on a quantity of PSFCHs received by the terminal device in a slot; or
   determining the first duration based on a quantity of resource blocks RBs that are received by the terminal device in a slot and that are used for PSFCH transmission.

11. The method according to any one of claims 8 to 10, wherein the determining a first duration comprises:
determining the first duration based on a subcarrier spacing.

12. The method according to claim 11, wherein the subcarrier spacing is one of the following:

   a subcarrier spacing of the PSFCH;
   a subcarrier spacing of the PUCCH;
   a subcarrier spacing of the PUSCH;
   a smaller value of a subcarrier spacing of the PSFCH and a subcarrier spacing of the PUCCH; or
   a smaller value of a subcarrier spacing of the PSFCH and a subcarrier spacing of the PUSCH.

13. The method according to any one of claims 8 to 12, wherein the first duration satisfies the following relationship:

$$T_1 = (N_1 + X)(2048 + 144) \cdot \kappa 2^{-\mu} \cdot T_C,$$

wherein
$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

14. An information transmission apparatus, comprising:

   a transceiver unit, configured to receive a physical sidelink feedback channel PSFCH; and
   a processing unit, configured to determine a first duration, wherein
   the transceiver unit is further configured to send a physical uplink control channel PUCCH or a physical uplink shared channel PUSCH not earlier than a first moment, wherein the first moment is a moment the first duration after an end moment of receiving the PSFCH.

15. The apparatus according to claim 14, wherein that the first moment is a moment the first duration after an end moment of receiving the PSFCH comprises:
the first moment is the next symbol the first duration after the end moment of receiving the PSFCH.

16. The apparatus according to claim 14 or 15, wherein the processing unit is further configured to:

   determine the first duration based on a quantity of PSFCHs received in a slot; or
   determine the first duration based on a quantity of resource blocks RBs that are received in a slot and that are used for PSFCH transmission.

17. The apparatus according to any one of claims 14 to 16, wherein the processing unit is further configured to:
determine the first duration based on a subcarrier spacing.

18. The apparatus according to claim 17, wherein the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

19. The apparatus according to any one of claims 14 to 17, wherein the first duration satisfies the following relationship:

$$T_1 = (N_1 + X)(2048 + 144) \cdot \kappa 2^{-\mu} \cdot T_C,$$

wherein
$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

20. The apparatus according to any one of claims 14 to 19, wherein the PSFCH is located on any one of the following types of frequency domain resources:

one or more resource pools; or
one or more carriers; or
one or more frequency bands; or
one or more frequency band combinations.

21. An information transmission apparatus, comprising:
a transceiver unit, configured to receive a physical uplink control channel PUCCH or a physical uplink shared channel PUSCH not earlier than a first moment, wherein the PUCCH or the PUSCH is carrying the HARQ informaiton, the first moment is a moment the first duration after an end moment of receiving a physical sidelink feedback channel PSFCH by a terminal device.

22. The apparatus according to claim 21, wherein that the first moment is a moment the first duration after an end moment of receiving a physical sidelink feedback channel PSFCH by a terminal device comprises:
that the first moment is the next symbol the first duration after the end moment of receiving the PSFCH by the terminal device.

23. The apparatus according to claim 21 or 22, wherein the processing unit is further configured to:

determine the first duration based on a quantity of PSFCHs received by the terminal device in a slot; or
determine the first duration based on a quantity of resource blocks RBs that are received by the terminal device in a slot and that are used for PSFCH transmission.

24. The apparatus according to any one of claims 21 to 23, wherein the processing unit is further configured to:
determine the first duration based on a subcarrier spacing.

25. The apparatus according to claim 24, wherein the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

26. The apparatus according to any one of claims 21 to 25, wherein the first duration satisfies the following relationship:

$$T_1 = (N_1 + X)(2048 + 144) \cdot \kappa 2^{-\mu} \cdot T_C,$$

wherein

$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

27. A terminal device, comprising:

> a transceiver unit, configured to receive a physical sidelink feedback channel PSFCH; and
> a processing unit, configured to determine a first duration, wherein
> the transceiver unit is further configured to send a physical uplink control channel PUCCH or a physical uplink shared channel PUSCH not earlier than a first moment, wherein the first moment is a moment the first duration after an end moment of receiving the PSFCH.

28. The terminal device according to claim 27, wherein the first moment is a moment the first duration after an end moment of receiving the PSFCH comprises:
that the first moment is the next symbol the first duration after the end moment of receiving the PSFCH.

29. The terminal device according to claim 27 or 28, wherein the processing unit is further configured to:

> determine the first duration based on a quantity of PSFCHs received in a slot; or
> determine the first duration based on a quantity of resource blocks RBs that are received in a slot and that are used for PSFCH transmission.

30. The terminal device according to any one of claims 27 to 29, wherein the processing unit is further configured to:
determine the first duration based on a subcarrier spacing.

31. The terminal device according to claim 30, wherein the subcarrier spacing is one of the following:

> a subcarrier spacing of the PSFCH;
> a subcarrier spacing of the PUCCH;
> a subcarrier spacing of the PUSCH;
> a smaller value of a subcarrier spacing of the PSFCH and a subcarrier spacing of the PUCCH; or
> a smaller value of a subcarrier spacing of the PSFCH and a subcarrier spacing of the PUSCH.

32. The terminal device according to any one of claims 27 to 30, wherein the first duration satisfies the following relationship:

$$T_1 = (N_1 + X)(2048 + 144) \cdot \kappa 2^{-\mu} \cdot T_c,$$

wherein

$T_1$ is the first duration, $N_1$ is a quantity of symbols that is determined based on a first subcarrier spacing, $X$ is a quantity of symbols that is determined based on the quantity of PSFCHs received in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

33. The terminal device according to any one of claims 27 to 32, wherein the PSFCH is located on any one of the following types of frequency domain resources:

> one or more resource pools; or
> one or more carriers; or
> one or more frequency bands; or
> one or more frequency band combinations.

34. A network device, comprising:

> a processing unit, configured to determine a first duration; and

a transceiver unit, configured to receive a physical uplink control channel PUCCH or a physical uplink shared channel PUSCH not earlier than a first moment, wherein the first moment is a moment the first duration after an end moment of receiving a physical sidelink feedback channel PSFCH by a terminal device.

35. The network device according to claim 34 wherein that the first moment is a moment the first duration after an end moment of receiving a physical sidelink feedback channel PSFCH by a terminal device comprises:
that the first moment is the next symbol the first duration after the end moment of receiving the PSFCH by the terminal device.

36. The network device according to claim 34 or 35, wherein the processing unit is further configured to:

determine the first duration based on a quantity of PSFCHs received by the terminal device in a slot; or
determine the first duration based on a quantity of resource blocks RBs that are received by the terminal device in a slot and that are used for PSFCH transmission.

37. The network device according to any one of claims 34 to 36, wherein the processing unit is further configured to:
determine the first duration based on a subcarrier spacing.

38. The network device according to claim 37, wherein the subcarrier spacing is one of the following:

a subcarrier spacing of the PSFCH;
a subcarrier spacing of the PUCCH;
a subcarrier spacing of the PUSCH;
a smaller value of a subcarrier spacing of the PSFCH and a subcarrier spacing of the PUCCH; or
a smaller value of a subcarrier spacing of the PSFCH and a subcarrier spacing of the PUSCH.

39. The network device according to any one of claims 34 to 38, wherein the first duration satisfies the following relationship:

$$T_1 = (N_1 + X)(2048 + 144) \cdot \kappa 2^{-\mu} \cdot T_C,$$

wherein
$T_1$ is the first duration, $N_1$ is a quantity of symbols that is determined based on a first subcarrier spacing, $X$ is a quantity of symbols that is determined based on the quantity of PSFCHs received by the terminal device in the slot or the quantity of resource blocks RBs used for PSFCH transmission, $T_c$ is a first time unit, $T_s$ is a second time unit, $\kappa$ is a ratio of $T_s$ to $T_c$, and $\mu$ is the subcarrier spacing.

40. A communication apparatus, wherein the apparatus comprises a processor and a memory; the memory stores a computer program; and the processor executes the computer program stored in the memory, to enable the apparatus to perform the method according to any one of claims 1 to 7.

41. A communication apparatus, wherein the apparatus comprises a processor and a memory; the memory stores a computer program; and the processor executes the computer program stored in the memory, to enable the apparatus to perform the method according to any one of claims 8 to 13.

42. A communication apparatus, comprising a processor and an interface circuit, wherein

the interface circuit is configured to receive code instructions and transmit the code instructions to the processor; and
the processor is configured to run the code instructions to perform the method according to any one of claims 1 to 7.

43. A communication apparatus, comprising a processor and an interface circuit, wherein

the interface circuit is configured to receive code instructions and transmit the code instructions to the processor; and
the processor is configured to run the code instructions to perform the method according to any one of claims 8 to 13.

44. A computer-readable storage medium, configured to store instructions, wherein when the instructions are executed, the method according to any one of claims 1 to 7 is implemented.

45. A computer-readable storage medium, configured to store instructions, wherein when the instructions are executed, the method according to any one of claims 8 to 13 is implemented.

FIG. 1

FIG. 2

FIG. 3

Second terminal device | First terminal device | Network device

Step S400: The first terminal device receives a physical sidelink feedback channel PSFCH

Step S402: Determine a first time period

Step S404: Send a physical uplink control channel PUCCH or a physical uplink shared channel PUSCH to the network device not earlier than a first moment

Step S406: Receive the PUCCH or the PUSCH sent by the first terminal device

FIG. 4

```
┌─────────────┐
│  Downlink   │
│  control    │
│ information │
│    DCI      │
└─────────────┘
```

```
                    ┌──────────┐        ┌──────────┐
                    │ Physical │        │ Physical │
                    │ sidelink │        │ sidelink │
                    │  shared  │        │ feedback │
                    │ channel  │        │ channel  │
                    │  PSSCH   │        │  PSFCH   │
                    └──────────┘        └──────────┘
```

```
                                        ┌──────────┐
                                        │ Physical │
                                        │  uplink  │
                                        │ control  │
                                        │ channel  │
                                        │  PUCCH   │
                                        └──────────┘
```

|←————— K —————→|

Time domain

FIG. 5

```
                                              S600
┌─────────────────────────────────────────────┐
│ A network device determines a first time     │
│ period                                        │
└─────────────────────────────────────────────┘
                      │
                      ▼
                                              S602
┌─────────────────────────────────────────────┐
│ The network device indicates, to a first     │
│ terminal device, a time period K and a        │
│ resource of a physical uplink control         │
│ channel PUCCH or a physical uplink shared     │
│ channel PUSCH                                 │
└─────────────────────────────────────────────┘
                      │
                      ▼
                                              S604
┌─────────────────────────────────────────────┐
│ The network device receives, on the indicated │
│ resource of the PUCCH or the PUSCH, the        │
│ PUCCH or the PUSCH sent by the first           │
│ terminal device                                │
└─────────────────────────────────────────────┘
```

FIG. 6

S700

Determine a length of a selection window based on
capability information of a first terminal device

Send a physical sidelink control channel PSCCH
and/or a physical sidelink shared channel PSSCH to
a second terminal device

S702

FIG. 7

Time (ms)

Sensing window

n

Selection window

n+Ti

n+Tj

FIG. 8

Information sending apparatus 90

Transceiver
unit 900

Processing
unit 902

FIG. 9

Information receiving apparatus 100

Transceiver unit 1002

Processing unit 1000

FIG. 10

Terminal device 110

Transceiver unit 1100

Processing unit 1102

FIG. 11

Network device 120

Transceiver unit 1202

Processing unit 1200

FIG. 12

Communication apparatus 13

Processor 130

Memory 132

FIG. 13

Communication apparatus 14

Processor 140

Interface circuit 142

FIG. 14

Communication apparatus 15

Processor 150

Memory 152

FIG. 15

Communication apparatus 16

Processor 160

Interface circuit 162

FIG. 16

Information sending apparatus 170

Transceiver unit 1702

Processing unit 1700

FIG. 17

Communication apparatus 18

Processor
180

Memory
182

FIG. 18

Communication apparatus 19

Processor 190

Interface circuit 192

FIG. 19

## INTERNATIONAL SEARCH REPORT

| International application No. |
| --- |
| **PCT/CN2020/084309** |

**A.    CLASSIFICATION OF SUBJECT MATTER**

H04W 4/40(2018.01)i;   H04W 72/04(2009.01)i

According to International Patent Classification (IPC) or to both national classification and IPC

**B.    FIELDS SEARCHED**

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI, EPODOC, IEEE, CNKI, CNPAT, 3GPP: 物理侧行反馈信道, 第一时间段, 物理上行控制信道, 物理上行共享信道, 第一时刻, 不早于, 调度, 自动重传, HARQ, PUCCH, PUSCH, PSFCH, dispatch, timing, later

**C.    DOCUMENTS CONSIDERED TO BE RELEVANT**

| Category* | Citation of document, with indication, where appropriate, of the relevant passages | Relevant to claim No. |
| --- | --- | --- |
| A | CN 110943809 A (KT CORPORATION) 31 March 2020 (2020-03-31)<br>description paragraphs 0061-0150, claims 1-15, figures 1-20 | 1-45 |
| A | CN 110311762 A (BEIJING SPREADTRUM HIGH-TECH COMMUNICATIONS TECHNOLOGY CO., LTD.) 08 October 2019 (2019-10-08)<br>entire document | 1-45 |
| A | US 2020022089 A1 (SAMSUNG ELECTRONICS CO., LTD.) 16 January 2020 (2020-01-16)<br>entire document | 1-45 |
| A | WO 2020022752 A1 (SAMSUNG ELECTRONICS CO., LTD.) 30 January 2020 (2020-01-30)<br>entire document | 1-45 |
| A | US 2019363843 A1 (GORDAYCHIK, Brian) 28 November 2019 (2019-11-28)<br>entire document | 1-45 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 December 2020** | **31 December 2020** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/084309**

| Patent document cited in search report | | | Publication date (day/month/year) | Patent family member(s) | | | Publication date (day/month/year) |
|---|---|---|---|---|---|---|---|
| CN | 110943809 | A | 31 March 2020 | US | 2020099479 | A1 | 26 March 2020 |
| | | | | KR | 2020034924 | A | 01 April 2020 |
| CN | 110311762 | A | 08 October 2019 | None | | | |
| US | 2020022089 | A1 | 16 January 2020 | WO | 2020013641 | A1 | 16 January 2020 |
| WO | 2020022752 | A1 | 30 January 2020 | US | 2020029318 | A1 | 23 January 2020 |
| US | 2019363843 | A1 | 28 November 2019 | US | 2020274656 | A1 | 27 August 2020 |

Form PCT/ISA/210 (patent family annex) (January 2015)